(19) Europäisches Patentamt
European Patent Office
Office européen des brevets

(11) EP 2 790 089 A1

(12) EUROPEAN PATENT APPLICATION

(43) Date of publication:
15.10.2014 Bulletin 2014/42

(51) Int Cl.:
*G06F 3/03* (2006.01)

(21) Application number: 13183392.3

(22) Date of filing: 06.09.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 09.04.2013 KR 20130038816
18.07.2013 KR 20130084842

(71) Applicant: Samsung Electronics Co., Ltd
Gyeonggi-do 443-742 (KR)

(72) Inventors:
• Jakubiak, Antoni
02-674 Warsaw (PL)
• Strupczewski, Adam
02-674 Warsaw (PL)
• Grzesiak, Grzegorz
02-674 Warsaw (PL)
• Bieniusiewicz, Jacek
02-674 Warsaw (PL)
• Nowicki, Konrad
02-674 Warsaw (PL)
• Talarek, Magda
02-674 Warsaw (PL)
• Siminski, Pawel
02-674 Warsaw (PL)
• Toczyski, Tomasz
02-674 Warsaw (PL)
(74) Representative: Nederlandsch Octrooibureau
P.O. Box 29720
2502 LS The Hague (NL)

(54) **Portable device and method for providing non-contact interface**

(57) A method for controlling operations of a portable device through a touch-free user input in the portable device having a projector module is provided. To this end, once the projector module is driven, an application execution screen is projected through the projector module, and if a proximity event is detected, a camera module is activated to acquire an image from which a user gesture is recognized. The pointer on the projected image is controlled corresponding to the user gesture. The user gesture is used to dispatch an application as well as to control the pointer. In this way, a user may view an image projected from the projector module of the portable device without jittering while intuitively manipulate the portable device without touching the touch screen, such that user convenience is maximized.

FIG.6

**Description**

**TECHNICAL FIELD**

The present disclosure relates to a portable device and a method for controlling the portable device. More particularly, the present disclosure relates to a portable device in which a rendered screen is displayed on a screen of the portable device or is projected and displayed outside the portable device.

**BACKGROUND**

Recently, portable devices such as smart phones or tablet Personal Computers (PCs) have gained a huge increase in popularity. With the increase of popularity of such devices, applications using the portable devices are also being actively developed. Such a portable device includes a touch screen, and a user many manipulate the portable device through the touch screen.

However, in a portable device, portability is emphasized, and thus a size of a touch screen included in the portable device is inevitably limited. In particular, when the user views a moving picture or a still picture by using the portable device, the user may feel inconvenience in viewing the moving or still picture due to the limited size of the touch screen.

As a result, when a portable device displays an application onto an external device such as a large-size TV, the application is generally controlled by a touch input through a touch screen of the portable device.

The portable device may also project and display an image using a projector module. The user may view the image in a realistic way through an external large-size screen instead of the touch screen of the limited size.

However, when a particular command is input during projection of the image onto an external device through the projector module, the user inputs the command by directly touching the touch screen or pressing a key of the portable device. As the user touches the touch screen, the portable device that is located in a particular position with being in focus may be dislocated and in this case, the image projected outside the portable device may be jittered.

Hence, a need exists for a technique in which a user may view an image projected from a projector module without jittering while easily manipulating a portable device.

In addition, a portable device generally includes a touch screen to provide a user interface. In this scheme in which the user interface is provided through the touch screen, multiple continuous touch inputs, such as a drag after a touch, may be required, causing inconvenience to users. Moreover, in a device whose display screen size is not large, such as a portable device, a touch input unit and the display screen are used at the same time, such that the screen is often covered by a finger. Therefore, a need exists for a method that allows a user to input a command for executing a desired function without looking at the touch screen.

The above information is presented as background information only to assist with an understanding of the present disclosure. No determination has been made, and no assertion is made, as to whether any of the above might be applicable as prior art with regard to the present disclosure.

**SUMMARY**

Aspects of the present disclosure are to address at least the above-mentioned problems and/or disadvantages and to provide at least the advantages described below. Accordingly, aspects of the present disclosure are to provide a portable device and a method for displaying an image projected outside the portable device without jittering even during manipulation of the portable device.

In addition, aspects of the present disclosure also provide a portable device and a method for providing a touch-free interface without hardware structure change.

Aspects of the present disclosure also provide an apparatus and method for manipulating a portable device having a projector module through a user gesture.

Aspects of the present disclosure are to provide a portable device and a method for enabling a user to perform various manipulations in a contact-free manner.

Other objects to be provided in the present disclosure may be understood by various embodiments described below.

According to an aspect of the present disclosure, a method for providing a touch-free interface in a portable device is provided. The method includes displaying an execution screen of an application on a touch screen of the portable device, projecting and displaying a projection image corresponding to the execution screen of the application outside the portable device, activating a camera module to photograph a user input means, displaying a pointer on the projection image, and moving and displaying the pointer corresponding to the user input means photographed by the camera module.

According to another aspect of the present disclosure, a portable device for providing a touch-free interface is provided. The portable device includes a display configured to display an execution screen of an application, a projector module configured to project and display a projection image corresponding to the execution screen of the application outside the portable device, at least one camera module configured to continuously capture a plurality of image frames including a user input means, and a controller configured to displaying a pointer on the projection image, and to move and display the pointer corresponding to the user input means photographed by the camera module.

Other aspects, advantages, and salient features of the disclosure will become apparent to those skilled in the art from the following detailed description, which, taken in conjunction with the annexed drawings, discloses various embodiments of the present disclosure.

## BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a schematic block diagram illustrating a portable device according to an embodiment of the present disclosure;

FIG. 2 is a front perspective view of a portable device according to an embodiment of the present disclosure;

FIG. 3 is a rear perspective view of a portable device according to an embodiment of the present disclosure;

FIG. 4 is a flowchart illustrating operations of a portable device including a projector module according to an embodiment of the present disclosure;

FIGS. 5A and 5B are flowcharts illustrating operations based on a proximity condition for determining whether to activate a camera module according to an embodiment of the present disclosure;

FIG. 6 is a diagram illustrating a finger registration screen according to an embodiment of the present disclosure;

FIG. 7 is a diagram illustrating an image for projecting a pointer corresponding to a finger according to an embodiment of the present disclosure;

FIGS. 8A, 8B, 8C, 8D, 9A, 9B, and 9C are diagrams illustrating examples of recognition of a finger used for control of a pointer in a finger image according to an embodiment of the present disclosure;

FIG. 10 is a flowchart illustrating a method for conditionally dispatching a touch screen event in a portable device according to an embodiment of the present disclosure;

FIG. 11 is a flowchart illustrating operations of a portable device including a projector module according to another embodiment of the present disclosure;

FIG. 12 is a schematic block diagram of a portable device according to an embodiment of the present disclosure;

FIG. 13 is a flowchart illustrating operations of a portable device according to an embodiment of the present disclosure;

FIG. 14 is a diagram for describing a hand mask computing operation according to an embodiment of the present disclosure;

FIG. 15 is a diagram for describing an inscribed circle computing operation according to an embodiment of the present disclosure;

FIG. 16 is a diagram illustrating a method for determining an inscribed circle in an image according to an embodiment of the present disclosure;

FIG. 17 is a diagram for describing a hand posture recognition operation according to an embodiment of the present disclosure;

FIGS. 18A, 18B, 18C, and 18D are diagrams illustrating different hand postures according to an embodiment of the present disclosure;

FIG. 19 is a diagram for describing a method for computing a zoom factor according to an embodiment of the present disclosure;

FIGS. 20A, 20B, and 20C are diagrams illustrating a hand posture sequence corresponding to a tap gesture according to an embodiment of the present disclosure; and

FIGS. 21A, 21B, 21C, 21D, and 21E are diagrams illustrating a hand posture sequence corresponding to a zoom gesture according to an embodiment of the present disclosure.

Throughout the drawings, like reference numerals will be understood to refer to like parts, components, and structures.

## DETAILED DESCRIPTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary.. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Although ordinal numbers such as "first", "second", and so forth will be used to describe various components, those components are not limited by the terms, or the order of such terms. The terms are used only for distinguishing one component from another component. For example, a first component may be referred to as a second component and likewise, a second component may also be referred to as a first component, without departing from the teaching of the inventive concept. The term "and/or" used herein includes any and all combinations of one or more of the associated listed items.

The terminology used herein is for the purpose of describing various embodiments only and is not intended to be limiting of various embodiments. As used herein, the singular forms are intended to include the plural forms as well, unless the context clearly indicates otherwise. It will be further understood that the terms "comprises" and/or "has" when used in this specification, specify the presence of stated feature, number, step, operation, component, element, or a combination thereof but do not preclude the presence or addition of one or more other features, numbers, steps, operations, components, elements, or combinations thereof.

Unless otherwise defined, all terms (including technical and scientific terms) used herein have the same meaning as commonly understood by one of ordinary skill in the art to which various embodiments belong. It will be further understood that terms, such as those defined in commonly used dictionaries, should be interpreted as having a meaning that is consistent with their meaning in the specification with the context of the relevant art as understood by the artisan at the time of disclosure and will not be interpreted in an idealized or overly formal sense unless expressly so defined herein.

In the present disclosure, a portable device may be a device including a touch screen, and the portable device may be referred to as a portable terminal, a mobile terminal, a communication terminal, a portable communication terminal, or a portable mobile terminal.

For example, the portable device may be a smart phone, a cellular phone, a game console, a Television (TV), a display, a vehicle head unit, a notebook computer, a laptop computer, a tablet computer, a Personal Media Player (PMP), a Personal Digital Assistant (PDA), or the like. The portable device may be implemented with a pocket-size portable communication terminal having a wireless communication function. The portable device may also have a flexible device or a flexible display.

A representative structure of the portable device is associated with a cellular phone, and some components may be omitted or changed from the representative structure of the portable device.

The present disclosure provides, in a portable device having a projector module, a method for controlling an operation of the portable device through a touch-free user input. To this end, in the present disclosure, if the projector module is driven, an application execution screen is projected through the projector module, and if a proximity event is sensed, a camera module is activated to acquire an image and recognize a user gesture from the acquired image, after which a pointer on a projected image is controlled corresponding to the user gesture. The present disclosure also uses a user gesture to dispatch an application as well as to control a pointer. By doing so, a user may intuitively manipulate the portable device without touching a touch screen, and may view the image projected from the projector module without image jittering, thereby maximizing user convenience.

The present disclosure may be applied to portable devices including external screens as well as portable devices including projector modules. For example, the portable device may be configured to display an application on an external TV.

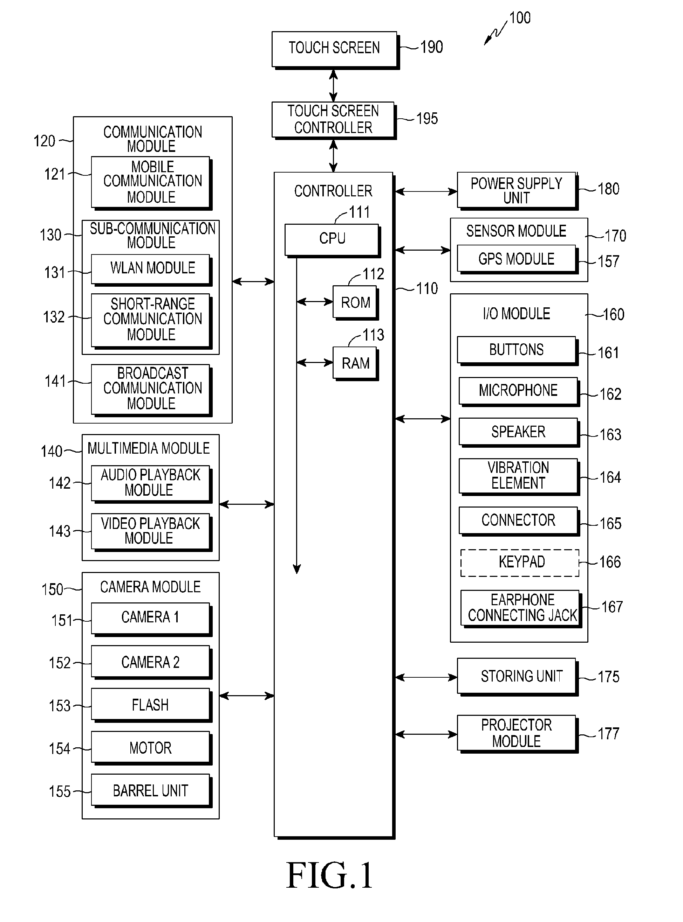

FIG. 1 is a schematic block diagram illustrating a portable device 100 according to an embodiment of the present disclosure.

Referring to FIG. 1, the portable device 100 may be connected with an external electronic device (not illustrated) by using at least one of a communication module 120, a connector 165, and an earphone connecting jack 167. The external electronic device may include one of various devices which are removable from the portable device 100 and are connectible with the portable device 100 in a wired manner, such as, for example, an earphone, an external speaker, a Universal Serial Bus (USB) memory, a charging device, a cradle/dock, a Digital Multimedia Broadcasting (DMB) antenna, a mobile payment-related device, a health management device (a blood pressure monitor or the like), a game console, a vehicle navigation device, and so forth. The electronic device may include a wirelessly connectible Bluetooth communication device, a Near Field Communication (NFC) device, a WiFi Direct communication device, and a wireless Access Point (AP). The portable device 100 may be connected with another portable device or electronic device such as, for example, one of a cellular phone, a smart phone, a tablet Personal Computer (PC), a desktop PC, and a server, in a wired or wireless manner.

The portable device 100 includes a touch screen 190 and a touch screen controller 195. In the present disclosure, as examples of a display and a display controller, the touch screen 190 and the touch screen controller 195 will be described. The portable device 100 also includes a controller 110, the communication module 120, a multimedia module 140, a camera module 150, an input/output module 160, a sensor module 170, a storing unit 175, a projector module 177, and a power supply unit 180.

The controller 110 may include a Central Processing Unit (CPU) 111, a Read Only Memory (ROM) 112 in which a control program for controlling the portable device 100 is stored, and a Random Access Memory (RAM) 113 which memorizes a signal or data input from the portable device 100 or is used as a memory region for a task performed in the portable device 100. The CPU 111 may include a single core, a dual core, a triple core, or a quad core processor. The CPU 111, the ROM 112, and the RAM 113 may be interconnected through an internal bus.

The controller 110 controls the communication module 120, the multimedia module 140, the camera module 150, the input/output module 160, the sensor module 170, the storing unit 175, the projector module 177, the power supply unit 180, the touch screen 190, and the touch screen controller 195.

The controller 110 detects a user input generated when a touchable user input means, the user's finger, or the like touches one of a plurality of graphic objects or graphic items displayed on the touch screen 190, approaches the object, or is disposed in proximity to the object. The controller 110 also identifies the object corresponding to the position on the touch screen 190 where the user input is sensed. The user input generated through the touch screen 190 includes one of a direct touch input for directly touching an object and a hovering input, which is an indirect touch input in which the object is approached within a preset recognizing distance but not directly touched. For example, when the user input means is positioned close to the touch screen 190, an object positioned immediately under the user input means may be selected. In the present disclosure, the user input may include a gesture input generated through the camera module 150, a switch/button input generated through the at least one button 161 or the keypad 166, and a voice input generated through the microphone 162 as well as the user input generated through the touch screen 190. In the present disclosure, a gesture input through the camera module 150 will be described as an example.

The object or item (or function item) is or may be displayed on the touch screen 190 of the portable device 100, and includes at least one of, for example, an application, a menu, a document, a widget, a picture, a moving image, an e-mail, an SMS message, and an MMS message. The object or item may be selected, executed, deleted, canceled, stored, and changed using the user input means. The item may be used as a concept including a button, an icon (or a shortcut icon), a thumbnail image, and a folder including at least one object in the portable device 100. The item may be presented in the form of an icon, a text, or the like.

The shortcut icon is an image displayed on the touch screen 190 of the portable device 100 for quick execution of an application, a call, a contact number, a menu, and so forth provided in the portable device 100. Upon input of a command or a selection for executing the shortcut icon, a corresponding application is executed.

The controller 110 detects a user input event, such as a hovering event, when the user input means, for example, a finger, approaches the touch screen 190 or is disposed in proximity to the touch screen 190.

Upon generation of a user input event with respect to a preset item or in a preset manner, the controller 110 performs a preset program operation corresponding to the generated user input event.

The communication module 120 may include a mobile communication module 121, a sub communication module 130, and a broadcast communication module 141.

The portable device 100 may include at least one of the mobile communication module 121, a Wireless Local Area Network (WLAN) module 131, and a short-range communication module 132.

The mobile communication module 121 may facilitate the connection between the portable device 100 and an external device through mobile communication by using one or more antennas (not illustrated) under control of the controller 110. The mobile communication module 121 transmits/receives a wireless signal for a voice call, a video call, a text message (Short Messaging Service (SMS)), and/or a multimedia message (Multi Media Service (MMS)) with a cellular phone (not illustrated), a smart phone (not illustrated), a tablet PC, or another electronic device (not illustrated) which has a phone number input into the portable device 100.

The sub communication module 130 may include at least one of the WLAN module 131 and the short-range communication module 132. For example, the sub communication module 130 may include one or both of the WLAN module 131 or the short-range communication module 132.

The WLAN module 131 may be connected to the Internet in a place where a wireless Access Point (AP) (not illustrated) is installed, under control of the controller 110. The WLAN module 131 supports the wireless LAN standard IEEE802.11x of the Institute of Electrical and Electronics Engineers (IEEE). The short-range communication module 132 may wirelessly perform short-range communication between the portable device 100 and an external electronic device under control of the controller 110. The short-range communication may include Bluetooth, Infrared Data Association (IrDA), WiFi-Direct communication, NFC communication, or the like.

The broadcast communication module 141 may receive a broadcast signal (for example, a TV broadcast signal, a radio broadcast signal, or a data broadcast signal) and broadcast additional information (for example, an Electronic Program Guide (EPG) or an Electronic Service Guide (ESG)) transmitted from a broadcasting station (not shown) via a broadcast communication antenna (not illustrated) under control of the controller 110.

The multimedia module 140 may include an audio playback module 142 or a video playback module 143. The audio playback module 142 may play a digital audio file (for example, a file having a file extension such as 'mp3', 'wma', 'ogg', or 'wav') stored in the storing unit 175 or received under control of the controller 110. The video playback module 143 may play a digital video file (for example, a file having a file extension such as 'mpeg', 'mpg', 'mp4', 'avi', 'mov', or 'mkv') stored or received under control of the controller 110.

The multimedia module 140 may be integrated into the controller 110.

The camera module 150 may include a first camera 151 and a second camera 152 which capture a still image or a video under control of the controller 110. The camera module 150 may include at least one of a barrel unit 155 for performing the zoom-in/zoom-out operations for photographing, a motor 154 for controlling motion of the barrel unit 155, and a flash 153 for providing an auxiliary light source necessary for photographing. The first camera 151 may be positioned on the front surface of the portable device 100, and the second camera 152 may be positioned on the rear surface of the portable device 100.

According to the present disclosure, the camera module 150 may be applied to other types of cameras as well as vision cameras. For example, a thermal camera may be used instead of a vision camera. According to the present disclosure, the camera module 150 may be a sensor configured to map a certain region to a two-Dimensional (2D) image.

The first camera 151 and the second camera 152 each include a lens system, an image sensor, and so forth. The first camera 151 and the second camera 152 convert an optical signal input through the lens systems into an electric image signal and output the electric image signal to the controller 110. The user may capture a moving image or a still image through the first camera 151 and the second camera 152.

The input/output module 160 may include at least one of the at least one button 161, at least one microphone 162, at least one speaker 163, at least one vibration element 164, the connector 165, the keypad 166, and the earphone connecting jack 167. However, it should be noted that the input/output module 160 is not limited to those examples, and a cursor control such as, for example, a mouse, a track ball, a joy stick, or a cursor direction key may be provided to control movement of a cursor on the touch screen 190.

The buttons 161 may be formed on at least one of a front surface, a side surface, and a rear surface of a housing (or case) of the portable device 100, and may include at least one of a power/lock button, a volume button, a menu button, a home button, a back button, and a search button.

The microphone 162 receives voice or sound and generates a corresponding electric signal under control of the controller 110.

The speaker 163 outputs sound corresponding to various signals or data (for example, wireless data, broadcast data, digital audio data, digital video data, or the like) under control of the controller 110. The speaker 163 may output sound corresponding to a function executed by the portable device 100 (for example, button manipulation sound corresponding to a phone call, a ring back tone, or voice of a counterpart user). One or more speakers 163 may be formed in a proper position or proper positions of the housing of the portable device 100.

The vibration element 164 converts an electric signal into mechanical vibration under control of the controller 110. For example, in the portable device 100, in a vibration mode, the vibration element 164 operates when a voice call or a video call from another device (not illustrated) is received. One or more of the vibration element 164 may be disposed in the housing of the portable device 100. The vibration element 164 may operate in response to user input generated through the touch screen 190.

The connector 165 may be used as an interface for connecting the portable device 100 with an external device (not illustrated) or a power source (not illustrated). Under control of the controller 110, data stored in the storing unit 175 of the portable device 100 may be transmitted to an external electronic device or data may be received from the external electronic device through a wired cable connected to the connector 165. The portable device 100 receives power from the power source through the wired cable connected to the connector 165 or may charge a battery (not illustrated) by using the power source.

The keypad 166 receives key input from the user for control of the portable device 100. The keypad 166 includes a physical keypad (not illustrated) formed in the portable device 100 or a virtual keypad (not illustrated) displayed on the touch screen 190. The physical keypad (not illustrated) formed in the mobile portable device 100 may be excluded according to the capability or structure of the portable device 100.

An earphone (not illustrated) may be inserted into the earphone connecting jack 167 to be connected to the portable device 100.

The sensor module 170 may include at least one sensor for detecting a state of the portable device 100. For example, the sensor module 170 may include at least one of a proximity sensor for detecting the user's proximity with respect to the portable device 100, an illumination sensor (not illustrated) for detecting an amount of light around the portable device 100, a motion sensor (not illustrated) for detecting an operation of the portable device 100 (for example, rotation of the portable device 100 or acceleration or vibration applied to the portable device 100), a geo-magnetic sensor (not illustrated) for detecting a point of the compass by using the Earth's magnetic field, a gravity sensor for detecting a working direction of the gravity, an altimeter for measuring an atmospheric pressure to detect an altitude, and a Global Positioning System (GPS) module 157. The sensor module 170 may also include a camera sensor for sensing a user's gesture. According to an embodiment of the present disclosure, the sensor module 170 further includes an orientation sensor which is configured to handle a current orientation of the portable device 100.

The GPS module 157 receives electric waves from a plurality of GPS satellites (not illustrated) in the Earth's orbit, and calculates a location of the portable device 100 by using a time of arrival from the GPS satellite (not illustrated) to the portable device 100.

The storing unit 175 stores a signal or data which is input/output corresponding to operations of the communication module 120, the multimedia module 140, the camera module 150, the input/output module 160, the sensor module 170, or the touch screen 190, under control of the controller 110. The storing unit 175 may also store a control program and applications for control of the portable device 100 or the controller 110.

The term "storing unit" includes the storing unit 175, the ROM 112 and the RAM 113 in the controller 110, or a memory card (not illustrated) mounted in the portable device 100 (for example, a Secure Digital (SD) card, a memory stick). The storing unit 175 may include a non-volatile memory, a volatile memory, a Hard Disk Drive (HDD), or a Solid State Drive (SSD).

The storing unit 175 may also store applications of various functions such as navigation, video communication, games, an alarm application based on time, images for providing a Graphic User Interface (GUI) related to the applications, user information, documents, databases or data related to a method for processing touch inputs, background images (e.g., a menu screen, a standby screen, and so forth), operation programs necessary for driving the portable device 100, and images captured by the camera module 150.

The storing unit 175 is a machine, such as, for example, a non-transitory computer-readable medium. The term "machine-readable medium" includes a medium for providing data to the machine to allow the machine to execute a particular function. The storing unit 175 may include non-volatile media or volatile media. Such a medium needs to be of a tangible type so that commands delivered to the medium can be detected by a physical tool which reads the commands with the machine. The machine-readable medium may include, but is not limited to, at least one of a floppy disk, a flexible disk, a hard disk, a magnetic tape, a Compact Disc Read-Only Memory (CD-ROM), an optical disk, a punch card, a paper tape, a Random Access Memory (RAM), a Programmable Read-Only Memory (PROM), an Erasable PROM (EPROM), and a flash EPROM.

The projector module 177 enlarges various rendered images provided from the controller 110 through a projection lens and projects the images onto an external screen. The projector module 177 may include a light source for emitting light to be used in projection, a light-modulator for modulating light incident from the light source according to an image signal, and a lens unit for projecting the light incident from the light-modulator onto a screen. For example, the projector module 177 may project the same screen as an application execution screen displayed on the touch screen 190 or an output screen of an application selected by the user. The projector module 177 is configured to horizontally or vertically flip the application output.

The power supply unit 180 supplies power to one or more batteries disposed in the housing of the portable device 100 under control of the controller 110. The one or more batteries supply power to the portable device 100. The power supply unit 180 may also supply power input from an external power source through the wired cable connected with the connector 165 to the portable device 100. The power supply unit 180 may also supply power, which is wirelessly input from an external power source using a wireless charging technique, to the portable device 100.

The portable device 100 includes the touch screen 190 which provides a user graphic interface corresponding to various services (for example, call, data transmission, broadcasting, picture taking) to users.

The touch screen 190 outputs an analog signal, which corresponds to at least one input to the user graphic interface, to the touch screen controller 195. The touch screen 190 receives at least one user input through a user's body (for example, a finger including an index finger). The touch screen 190 also receives a continuous movement of one touch. The touch screen 190 outputs an analog signal corresponding to the received continuous movement of the touch to the touch screen controller 195.

According to an aspect of the present disclosure, the touch screen 190 highlights an image captured by the camera module 150. The touch screen 190 may be activated in a finger registration phase. The portable device 100 may include a power manager (not illustrated) that maximizes the highlighting strength of the touch screen 190 to illuminate a moving object, for example, a user input means. If the portable device 100 is arranged such that a front surface of the portable device 100 is oriented toward the user, the highlighting strength of the touch screen 190 may be maximized to illuminate the user input means such as a finger or a stylus pen.

In an embodiment of the present disclosure, a touch-free interface is implemented without hardware change, such that the quality of an image indicating the user input means should be guaranteed. To this end, when an image is captured, the highlighting strength of the touch screen 190 may be maximized or the flash 153 may be activated. In this way, the user input means is illuminated by using the touch screen 190 or the flash 153, thereby acquiring an image in which the user input means is clearly photographed and thus making it easy to distinguish the user input means from the captured image.

In the present disclosure, a touch may also include a non-contact touch (for example, when the user input means is positioned within a distance of, for example, 1 cm) in which the user input means may be detected without a direct contact with the touch screen 190. The touch may also include a direct contact between the touch screen 190 and a user input means such as a finger. A distance or interval from the touch screen 190 within which the user input means may be detected may be changed according to the capability or structure of the portable device 100. To separately detect a direct touch event based on a contact with the user input means and an indirect touch event (i.e., a hovering event), the touch screen 190 may be configured to output different values for values detected in the direct touch event and the hovering event. The values may be, for example, an analog voltage value or current value.

The touch screen 190 may be implemented as, for example, a resistive type, a capacitive type, an infrared type, an acoustic wave type, or a combination thereof.

The touch screen controller 195 converts the analog signal received from the touch screen 190 into a digital signal and transmits the digital signal to the controller 110. The controller 110 controls a User Interface (UI) displayed on the touch screen 190 by using the digital signal received from the touch screen controller 195. For example, the controller 110 may control a shortcut icon (not illustrated) displayed on the touch screen 190 to be selected or executed in response to a direct touch event or a hovering event. The touch screen controller 195 may be included in the controller 110.

The touch screen controller 195, by detecting a value (for example, an electric-current value) output through the touch screen 190, recognizes a hovering interval or distance as well as a user input position and converts the recognized distance into a digital signal (for example, a Z coordinate), which the touch screen controller 195 sends to the controller 110. The controller 110 may detect various user inputs received through the camera module 150, the input/output module 160, and the sensor module 170 as well as the touch screen 190. The user input may include various forms of information such as user's gesture, voice, pupils' motion, and biological signal as well as the touch. The controller 110 may control a predetermined operation or function corresponding to the detected user input to be performed in the portable device 100.

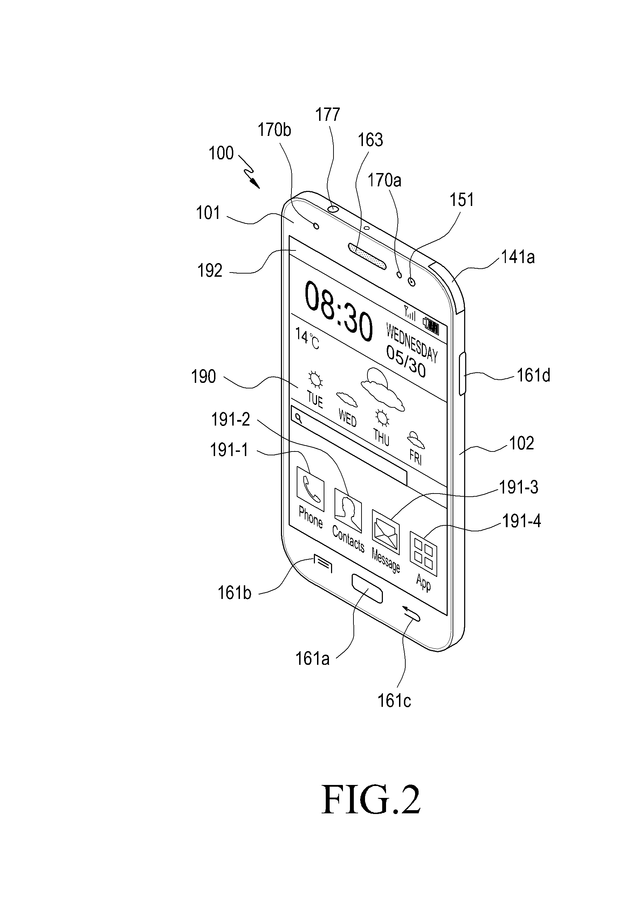

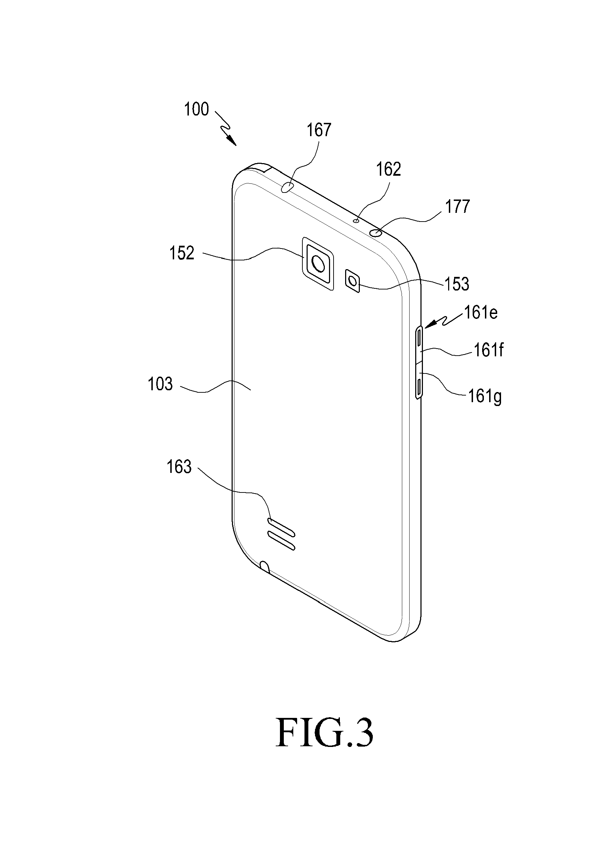

FIG. 2 is a front perspective view of the portable device 100 according to an embodiment of the present disclosure, and FIG. 3 is a rear perspective view of the portable device 100 according to an embodiment of the present disclosure.

Referring to FIGS. 2 and 3, the touch screen 190 is disposed in the center of a front surface 101 of the portable device 100. The touch screen 190 may be large enough to occupy most of the front surface 101 of the portable device 100. FIG. 2 shows an example in which a main home screen is displayed on the touch screen 190. The main home screen is an initial screen displayed on the touch screen 190 when the portable device 100 is powered on. When the portable device 100 has different home screens of several pages, the main home screen may be the first home screen among the home screens of the several pages. Shortcut icons 191-1, 191-2, and 191-3 for executing frequently used applications, a main menu change key 191-4, time, weather, and so forth may be displayed on the home screen. If the user selects the main menu change key 191-4, a menu screen is displayed on the touch screen 190. A status bar 192 indicating a state of the portable device 100, such as a battery charge state, a strength of a received signal, and a current time, may be formed in an upper portion of the touch screen 190.

A home button 161a, a menu button 161b, and a back button 161 c may be disposed in a lower portion of the touch screen 190. The home button 161a is intended to display the main home screen on the touch screen 190. For example, when a home screen, which is different from the main home screen, or a menu screen is displayed on the touch screen 190, the main home screen may be displayed on the touch screen 190 upon selection of the home button 161 a. If the home button 161 a is selected during execution of applications on the touch screen 190, the main home screen illustrated in FIG. 2 may be displayed on the touch screen 190. The home button 161a may be used to display recently used applications or a task manager on the touch screen 190.

The menu button 161b provides a connection menu which may be displayed on the touch screen 190. The connection menu may include, for example, a widget add menu, a background change menu, a search menu, an edit menu, and an environment setting menu.

The back button 161c may be used to display a screen which was displayed immediately before the currently executed screen or to terminate the most recently used application.

The first camera 151, an illumination sensor 170a, and a proximity sensor 170b may be disposed on an edge of the front surface 101 of the portable device 100. The second camera 152, the flash 153, and the speaker 163 may be disposed on a rear surface 103 of the portable device 100. The flash 153 illuminates a moving object, for example, the user input means, in an image captured by the second camera 152. The flash 153 may be activated when the rear surface of the portable device 100 is oriented forward. When the portable device 100 is arranged such that the rear surface of the portable device 100 is oriented toward the user, the flash 153 may be activated to illuminate the user input means.

A power/lock button 161 d, a volume button 161 e including a volume-up button 161f and a volume-down button 161g, a terrestrial DMB antenna 141a for broadcasting reception, one or more microphones 162, and the projector module 177 may be disposed on a lateral surface 102 of the portable device 100. The DMB antenna 141a may be fixed to or removable from the portable device 100.

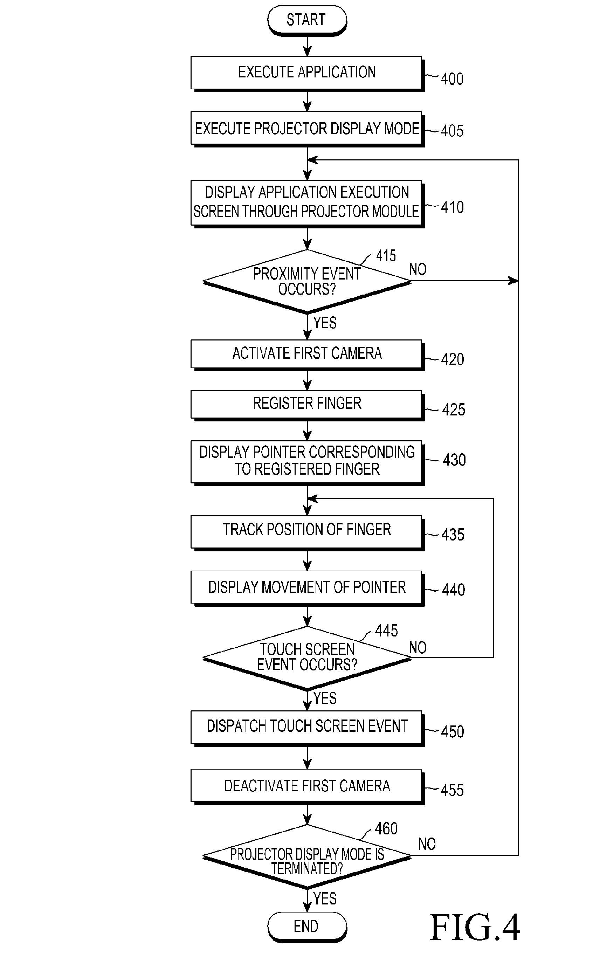

FIG. 4 is a flowchart illustrating operations of a portable device including a projector module according to an embodiment of the present disclosure.

Referring to FIG. 4, the controller 110 executes an application selected by the user at operation 400 and displays an application execution screen on the touch screen 190. For example, if a shortcut icon for executing an application displayed on the touch screen 190 is selected, an application execution screen corresponding to the selected icon may be displayed. If a projector application is selected by the user, a projector display mode is executed at operation 405. The controller 110 projects and displays the application execution screen outside the portable device 100 through the projector module 177 at operation 410. The controller 110 may control the projector module 177 to project the same image as the application execution screen displayed on the touch screen 190. The controller 110 may also control an image that is different from an image on the touch screen 190 to be rendered and projected corresponding to execution of the projector application.

In execution of the projector display mode, the portable device 100 focus is placed in a particular position so as to project an in-focus image. In this state, to manipulate the portable device 100, for example, to control a projector function, the user brings a hand close to the touch screen 190. If the user input means approaches the touch screen 190 when the application execution screen is displayed on the touch screen 190, the controller 110 determines through the sensor module 170 whether a proximity event occurs at operation 415. When the front surface of the portable device 100 is oriented upward, the first camera 151 on the front surface of the portable device 100 may be activated. Hence, if the controller 110 detects occurrence of the proximity event through the sensor module 170 at operation 415, the controller 110 activates the first camera 151 to acquire an image for controlling a pointer at operation 420. Simultaneously with activation of the first camera 151, the highlighting strength of the touch screen 190 may be maximized to illuminate the user input means.

According to an embodiment of the present disclosure, the first camera 151 may be activated automatically during activation of the projector module 177 as well as by a proximity signal detected by the proximity sensor 170b. The first camera 151 may also be activated by a user input such as key pressing.

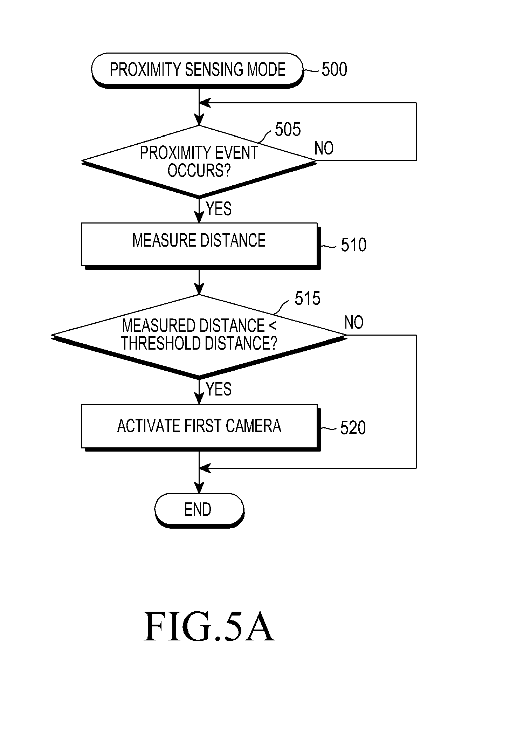

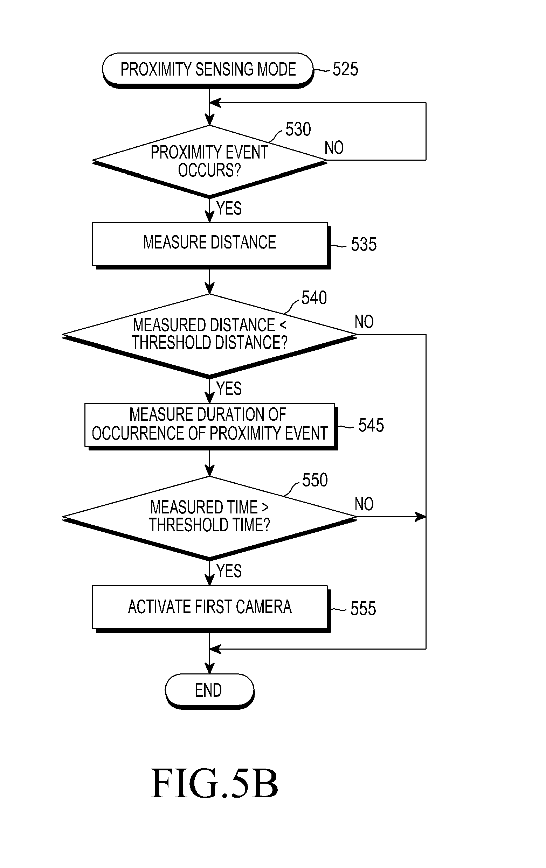

A proximity condition for determining whether to activate the first camera 151 is described below with respect to FIGS. 5A and 5B.

FIG. 5A is a flowchart illustrating operations when a distance is used as a condition for determining whether to activate a first camera in a proximity sensing mode according to an embodiment of the present disclosure.

Referring to FIG. 5A, the controller 110 enters the proximity sensing mode at operation 500, and determines whether a proximity event occurs at operation 505. For example, as the user brings a hand close to the touch screen 190 in which the proximity sensor 170b is disposed to manipulate the portable device 100, occurrence of the proximity event is detected by the proximity sensor 170b. If the proximity event occurs, the controller 110 measures a distance to the hand at operation 510. Generally, the proximity sensor 170b senses occurrence of the proximity event if an object comes within a predetermined recognition distance, in which a distance to the object is relatively short when the hand is located very close to the touch screen 190, but when the hand moves away from the touch screen 190, the distance increases. Accordingly, in the present disclosure, a threshold distance for conditionally activating the first camera 151 is set. As the threshold distance decreases, a recognition rate from a captured image may be improved.

The controller 110 determines whether the measured distance is less than the threshold distance at operation 515. The measured distance may be distance information included in proximity event information, or may be a distance measured by an ultrasonic sensor. If the measured distance is less than the threshold distance, the first camera 151 is activated at operation 520. However, if the measured distance is greater than the threshold distance, the inactive state of the first camera 151 is maintained.

FIG. 5B is a flowchart illustrating operations when a distance and a duration of occurrence of a proximity event are used as conditions for determining whether to activate a first camera in a proximity sensing mode according to an embodiment of the present disclosure.

Referring to FIG. 5B, operations 525 through 540 are the same as operations 500 through 515 of FIG. 5A, and thus will not be described in detail. For example, an object may move past the touch screen 190, regardless of an intended user input. Since the proximity event also occurs in this case, to remove such a non-intended user input, a duration of occurrence of the proximity event is used as a condition for determining whether to activate the first camera 151.

As the object comes within the threshold distance, a duration of occurrence of the proximity event is measured at operation 545 to determine whether the object comes as an intended approach for manipulation of the portable device 100. The duration of occurrence of the proximity event may be included in the proximity event information from the proximity sensor 170b. The controller 110 may count a duration of reception of the proximity event from the proximity sensor 170b. If the measured duration exceeds a threshold duration at operation 550, (i.e., movement of the object is determined as an intended approach for manipulation of the portable device 100), then the controller 110 activates the first camera 151 at operation 555.

While it has been described above that upon execution of the projector display mode, the sensor module 170 is driven to determine proximity by using sensing data of the sensor module 170 and then the first camera 151 is driven, the sensor module 170 and the first camera 151 may be driven together upon execution of the projector display mode.

Referring back to FIG. 4, if the controller 110 determines that the proximity event satisfying the conditions described with reference to FIG. 5A or 5B occurs, the first camera 151 is activated at operation 420 of FIG. 4. On the other hand, if the controller 110 determines that the proximity event satisfying the conditions does not occur, the controller 110 return to operation 410 to detect occurrence of the proximity event. Upon activation of the first camera 151 at operation 420, the first camera 151 captures a front image. The user has to register the user's finger to use the finger for controlling a pointer. To perform the finger registration process, a registration method should be guided on a screen or with voice.

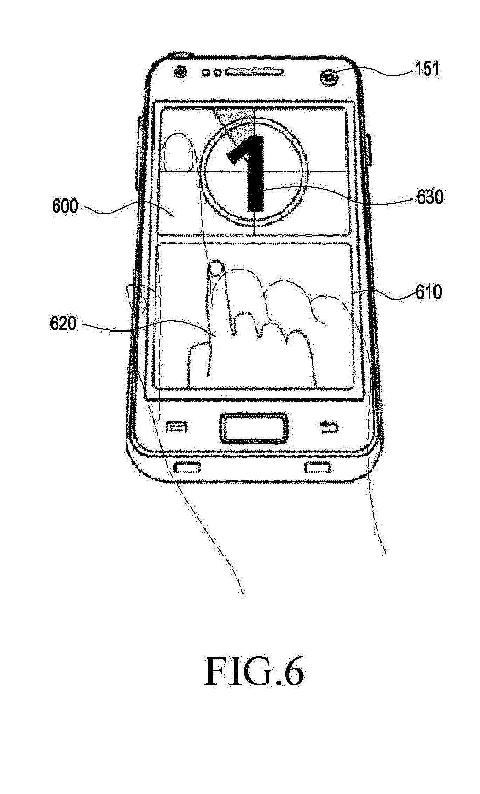

The finger registration process is described below with reference to FIG. 6.

FIG. 6 illustrates a finger registration screen when a hand is brought to the front surface of a portable device according to an embodiment of the present disclosure.

Referring to FIG. 6, although a finger is used as an example of a user input means for controlling a pointer in an embodiment of the present disclosure, such an example is provided to facilitate understanding of the present disclosure and a type of the user input means is not limited to this example. In other words, the present disclosure may be applied to not only registration and tracking of a position of a finger, but also registration and tracking of a position of another user input means, such as a pencil, or an object. The present disclosure may also be applied to tracking of one finger or object and simultaneous tracking of one or more fingers or objects. The graphic representation of the pointer may be different for left-handed and right-handed users.

As illustrated in FIG. 6, when the front surface of the portable device 100 is oriented upward, the first camera 151 on the front surface of the portable device 100 captures a front image. In the present disclosure, an image captured by the first camera 151 will be referred to as a front image and an image captured by the second camera 152 will be referred to as a rear image. The rear direction is oriented from the rear surface of the portable device 100 toward the exterior of the portable device 100, and the front direction is oriented from the front surface of the portable device 100 toward the exterior of the portable device 100. The front direction is a particular direction and the rear direction is a direction opposite to the particular direction. If the user desires to see an image projected onto the ceiling by turning the portable device 100 upright while the user is lying down, capturing using the first camera 151 or the second camera 152 may be possible.

In this state, if the user brings a hand 600 to the touch screen 190 of the portable device 100, the first camera 151 photographs the hand 600 on the front surface of the portable device 100 in the form of a still image or a moving image. A captured image 610 may be displayed on the touch screen 190, or by displaying a predetermined marker such as a finger shape 620 on the touch screen 190, the user may be guided to perform capturing in the finger shape 620. In this state, by displaying a registration effective time 630 on the touch screen 190, the user is encouraged to register a finger for pointer control.

Registration of a finger may be performed automatically by using an anatomic model of a finger, template matching methods or background segmentation methods, skin detection methods, Hough transform methods, contours detection method, cascade classifier method or any combination of the mentioned methods. In this case, displaying the registration method may be omitted. The graphic representation of the marker provided in the registration method may be different for left-handed and right-handed users.

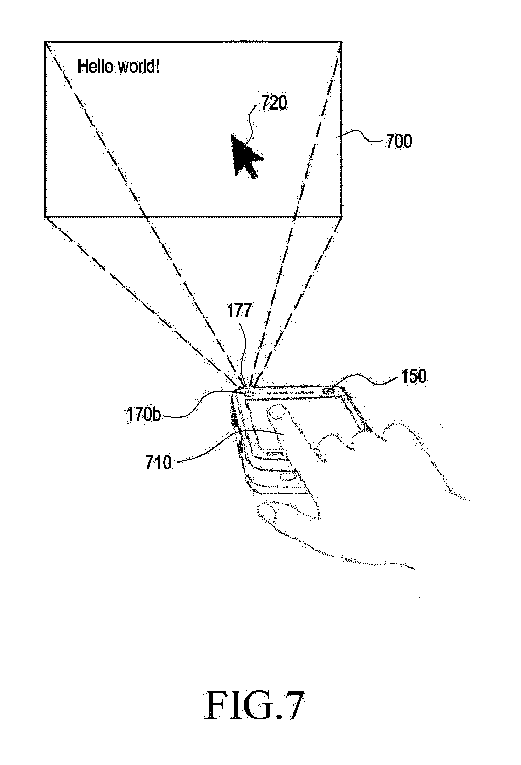

Referring back to FIG. 4, if finger registration is completed according to the finger registration guide at operation 425, the controller 110 displays a pointer 720 overlapped on a projected image 700 corresponding to a finger 710 as illustrated in FIG. 7 at operation 430. In an embodiment of the present disclosure, when a hand is photographed, a certain finger is used for pointer control, and for finger registration, a finger to be used as a pointer among fingers should be first detected. Such finger detection is described below.

To control the position of the pointer displayed on the projected image, the controller 110 tracks the position of the finger at operation 435 and moves and displays the position of the pointer according to the tracked position of the finger at operation 440. In an embodiment of the present disclosure, to track the position of the finger, two consecutive images are acquired from a video captured by the first camera 151 or the second camera 152, and for example, if two or more consecutive images are acquired from a video for error correction or background segmentation, position tracking may be improved.

FIG. 7 is a diagram illustrating an image for projecting a pointer corresponding to a finger according to an embodiment of the present disclosure

Referring to FIG. 7, when the user moves an unfolded finger without touching the touch screen 190, the pointer 720 on the projected image 700 also moves along the position of the finger. The moving distance and direction of the pointer 720 are determined according to moving distance and direction of a user gesture, and the pointer 720 is moved and displayed according to the determined distance and direction. When the same image as the projected image 700 is displayed on the touch screen 190, the same pointer as the projected pointer 720 may be displayed on the touch screen 190. The term "pointer" may refer to any projected graphics corresponding to a user input means, which is displayed on a projected image, without being limited to particular graphic (like an arrow). For example, the graphic may be an arrow, a cross marker, or a hand contour graphic. Additionally, the term "pointer" includes a graphical representation of the pointer, for example, for emulating a multi-touch behavior.

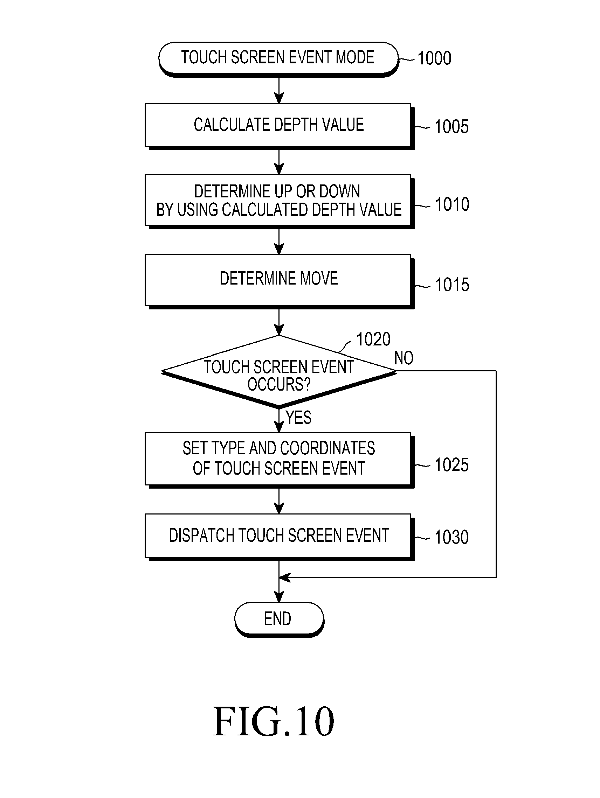

Referring back to FIG. 4, the controller 110 determines whether a touch screen event occurs at operation 445. If the touch screen event occurs, the controller 110 dispatches the touch screen event in a position corresponding to coordinates at which the touch screen event occurs, at operation 450. Operations 445 and 450 are described below with reference to FIG. 10. If an application is executed in response to a pointer execution command, the user pauses manipulation of the portable device 100, and in this case, it is not necessary to display movement of the pointer, such that the first camera 151 is deactivated at operation 455. The touch screen event is dispatched and then the first camera 151 is deactivated, but if the number of feature points extracted from an image in a feature point extraction phase is less than a predefined number, the first camera 151 may be deactivated.

At operation 460, the controller 110 determines whether the projector display mode is terminated. If the projector display mode is not terminated, the controller 110 returns to operation 410 to repeat the foregoing process. Thus, if the proximity sensor 170b senses that the user brings the hand close to the touch screen 190 to control the pointer again at operation 415, the first camera 151 is activated again at operation 420. When the projector display mode is maintained, the process of guiding the finger registration method for finger registration as at operation 425 may be skipped. The finger to be used for pointer control may be directly recognized in the captured hand image.

The foregoing present disclosure may be applied to portable devices including external screens as well as the portable device 100 including the projector module. For example, the portable device 100 may be configured to display an application on an external TV.

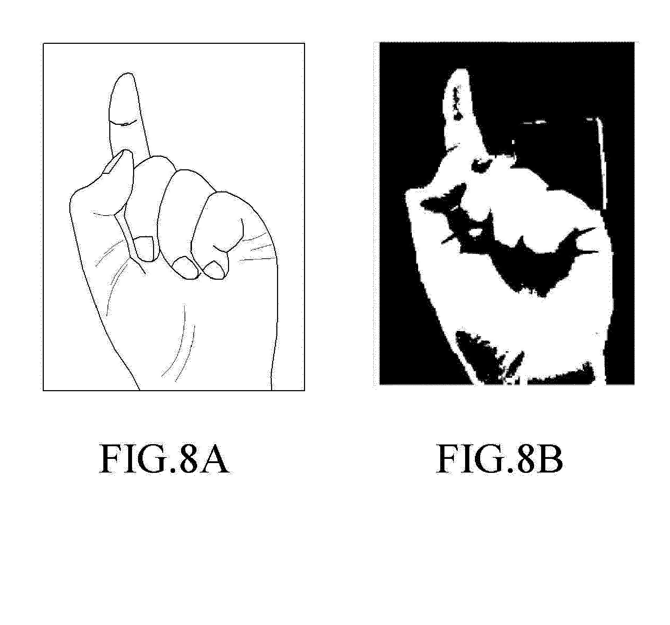

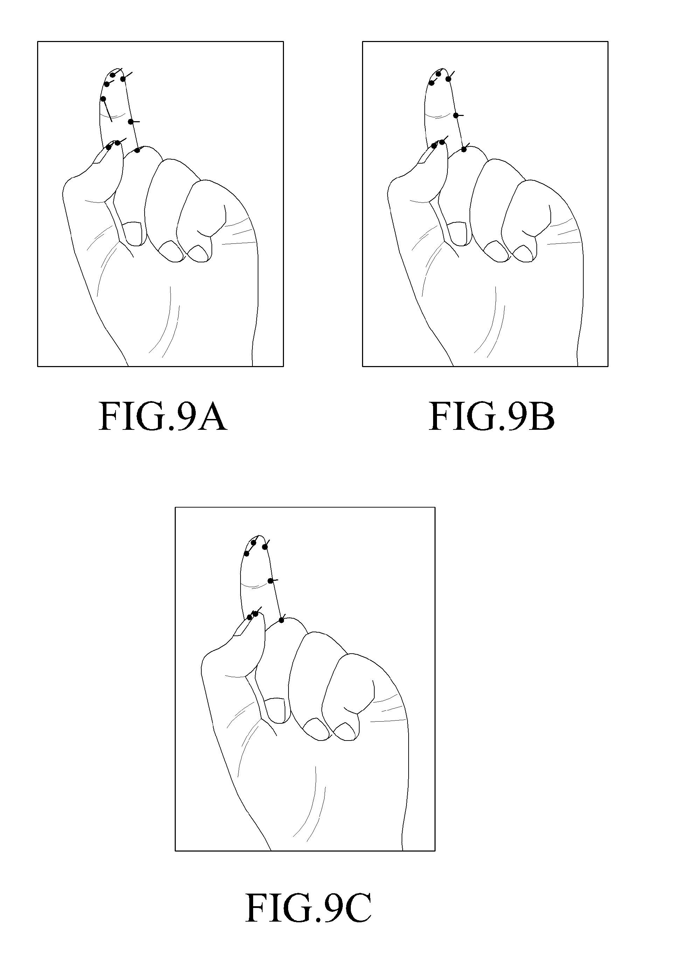

FIGS. 8A to 8D and 9A to 9C are diagrams illustrating examples of recognition of a user to be used for pointer control in a captured hand image according to an embodiment of the present disclosure.

Referring to FIG. 8A, if the controller 110 photographs a hand located a predetermined distance from the touch screen 190 through the first camera 151 when the front surface of the portable device 100 is oriented upward, the captured hand image is as illustrated in FIG. 8A. In this case, a video in a predetermined capturing range may be captured through the first camera 151, and image data may be provided to the controller 110. The first camera 151 may capture a predetermined number of consecutive images per second, and when consecutively generated images are referred to as frames, the frame may have serial numbers according to an order they are generated.

Once image frames including a background and an object such as a finger are sequentially input through the first camera 151, the controller 110 may perform the following operations. The controller 110 detects a finger region from the first image frame and determines a position and/or a displacement of an object, (e.g., a finger), in the finger region detected from each of sequentially input image frames.

As a finger region detection method, a hand region matched with a predetermined graphic, a marker, for example, a hand posture in which only one finger is unfolded, may be acquired and then a finger region may be designated from the hand region. In finger registration, by using a template image representing a finger, template matching may be performed between a captured image and the template image to extract feature points. Once the finger region is detected, feature points for tracking the finger are extracted from the finger region, and the extracted feature points are tracked for use in pointer control.

FIG. 8B illustrates a case where a skin region is acquired from a captured image to detect a finger region.

Referring to FIG. 8B, the skin region may be detected by distinguishing a skin-color region from a non-skin-color region in the captured image based on a skin color or the like.

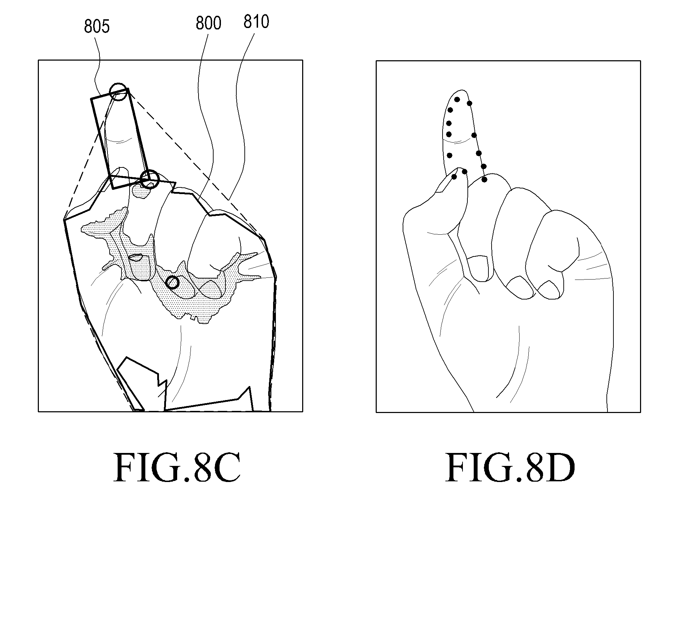

Referring to FIG. 8C, in the skin region, a hand region 800 corresponding to a hand posture in which a fist is clenched, for example, may be designated in the skin region, and a finger region 805 may be designated in the hand region 800. The designated regions 800 and 805 are set to an associated region 810.

FIG. 8D illustrates a case where feature points are extracted from a finger region.

Referring to FIG. 8D, feature points extracted from a still image of a hand are indicated by dots. These feature points may be extracted and tracked by at least one of randomly selecting some points in the finger region, selecting some predefined points in the finger region, computing corner detection according to a Shi-Tomasi corner detection method in the finger region, and computing corner detection according to a Harris and Stephens corner detection method in the finger region.

A feature point indicates a representative pixel or a pixel set that is subject to comparison in each frame for efficient comparison. The feature point may be mostly a boundary point having a large change in a line, a contrast, or a color that is easy to detect in an image frame. In an embodiment of the present disclosure, for feature point extraction from an image frame, initial feature points are allocated to a part of an image, (i.e., a boundary portion of a finger region), and moving feature points in the next image frame are searched. Feature points extracted in this way are used to track movement of a finger. Each of the extracted feature points has horizontal and vertical coordinates (x, y). Thus, by tracking a set of the feature points, a position of a finger may be tracked.

A displacement corresponding to feature point extraction and finger movement is as illustrated in FIGS. 9A through 9C. FIGS. 9A through 9C illustrate feature points and their displacement tracking results according to an embodiment of the present disclosure.

Referring to FIGS. 9A through 9C, feature points are traced based on moving trajectories of points when a finger moves between consecutive image frames and moving direction and amount of the finger are indicated. The feature points extracted from each of the consecutive image frames may be compared and this comparison process may be performed using optical flow tracking.

The process of tracking the position of the finger is performed as follows. The process includes an operation of acquiring a moving image including a finger through the camera module 150, an operation of acquiring a first image frame from the moving image, an operation of acquiring feature points to be tracked from the first image frame, an operation of computing an optical flow of the feature points to be tracked between the first image frame and a next second image frame, an operation of updating the feature points to be tracked, an operation of calculating deltaXY (dx, dy), and an operation of calculating deltaZ (dz).

The present disclosure provides a method for computing deltaXY and a method for computing deltaZ. These methods may be improved and combined together. Such improvements may include perspective correction with respect to the camera module 150, characteristic of finger movement at the joints, and hand rotation in the elbow joint.

The optical flow used in the present disclosure is based on optical flow element including first coordinates (x1, y1), second coordinates (x2, y2), and flow vectors (vx, vy). For example, let first coordinates of a first feature point of a first image representing a user gesture of moving a finger be (x1, y1) and let coordinates of the same feature point as that of the first image in the next image be second coordinates (x2, y2). The flow vectors satisfy relationships 'vx = x2 - x1' and 'vy = y2 - y1' x1 and x2 correspond to horizontal positions, for example, a horizontal direction, and y1 and y2 correspond to vertical positions, for example, a vertical direction, and each value may be determined on a pixel basis. To satisfy performance requirements, a different representation of the optical flow may be applied.

The operation of computing the optical flow includes acquiring feature points to be tracked, acquiring a first image frame and a second image frame, computing the optical flow according to a pyramidal implementation of a Lucas-Kanade algorithm, and applying a correctness filter in which the correctness filter eliminates the optical flow's elements if any flow for the feature points has not been found.

The operation of updating the feature points to be tracked includes acquiring the optical flow and averaging the optical flow vectors.

The operation of calculating deltaZ (dz) includes obtaining the optical flow, obtaining a set of first coordinates from the optical flow, obtaining a set of second coordinates from the optical flow, calculating a first gravity center for the first coordinate set, calculating a second gravity center for the second coordinate set, calculating a first average distance (d1) between the first gravity center and the first coordinate set, calculating a second average distance (d2) between the second gravity center and the second coordinate set, and calculating deltaZ representing the difference between the second average distance and the first average distance (deltaZ = d2 - d1). Since the finger region includes a plurality of feature points, for comparison between a set of feature points in the first image frame and a set of feature points in the next second image frame to express a start point of a user gesture with one coordinates, a gravity center of each feature point set is used. By using the gravity centers, a displacement, (i.e., a displacement of a finger), may be acquired in the respective images, allowing tracking of the finger's position.

Once the position of the finger is tracked through the foregoing steps, the pointer's position is controlled corresponding to the tracked position of the finger. As such, the portable device 100 senses displacement and direction of a user gesture input through the camera module 150, determines the pointer's position of the external screen based on the displacement and direction of the user gesture, and moves and displays the pointer to the determined position.

The pointer's position may be controlled as described below.

For example, based on the first coordinates (x1, y1) of the first feature point of the first image representing the user gesture and the second coordinates (x2, y2) of the feature point of the next image, deltaXY (dX, dY), (i.e., the horizontal distance dX and the vertical distance dY) may be calculated. The controller 110 may calculate the horizontal distance dX and the vertical distance dY, for example, based on Equation 1.

$$dX = x1 - x2, \quad dY = y1 - y2$$

$$\cdots\cdots\cdots\cdots\cdots\cdots\cdots \text{Equation (1)}$$

The controller 110 may scale a distance based on a scale factor. For example, a horizontal scale factor may be referred to as sX and a vertical scale factor may be referred to as sY. Moreover, sX may be a value calculated by dividing a width of a projector external screen by a width of a touch screen, and sY may be a value calculated by dividing a height of the projector external screen by a height of the touch screen.

For example, the controller 110 may scale a pointer's moving distance based on Equation 2, thus calculating a pointer's new position (npX, npY).

$$npX = pX + sX * dX, \quad npY = pY + sY * dY$$

$$\cdots\cdots\cdots\cdots\cdots \text{Equation (2)}$$

In Equation (2), pX indicates a current horizontal position and pY indicates a current vertical position. (pX, pY) indicates the current position of the pointer. npX indicates a horizontal moving distance of the pointer scaled from the current position, and npY indicates a vertical moving distance of the pointer scaled from the current position. The pointer's new position (npX, npY) is the pointer's position after movement from the current position.

The controller 110 may process the calculated pointer's new position (npX, npY) not to be outside a boundary. For example, horizontal coordinates of a projected image may be set to bx1 and bx2 and vertical coordinates of the projected image may be set to by1 and by2. Boundary conditions (bx1, bx2, by1, by2) of the projected image should be acquired. For example, the controller 110 may process the calculated pointer's new position (npX, npY) not to be outside the boundary by using Equation 3.

$$\begin{aligned}
&if\ npX < bx1, then\ npX = bx1,\\
&if\ npX > bx2, then\ npX = bx2,\\
&if\ npY < by1, then\ npY = by1,\\
&if\ npY > by2, then\ npY = by2
\end{aligned}$$

$$\cdots\cdots\cdots\cdots \text{Equation (3)}$$

The controller 110 corrects the new position of the pointer according to conditions as provided in Equation 3. If the pointer's position after movement is determined to be outside the boundary of the projected image, the controller 110 may process the pointer's position after movement to be in the boundary of the projected image. The controller 110 replaces the pointer's position with a corrected position corresponding to (pX = npX, pY = npY).

The controller 110 may determine the pointer's position (npX, npY) according to the foregoing process, and may control the projector module to display the determined pointer in a corresponding position on the projected image.

FIG. 10 is a flowchart illustrating a method for conditionally dispatching a touch screen event in a portable device according to an embodiment of the present disclosure.

Referring to FIG. 10, the touch screen event in an embodiment of the present disclosure need not be an event generated by direct touch of a user input means on the touch screen 190; the touch screen event also includes a concept of a user gesture taken through a user input means located within a predetermined distance from the touch screen 190 toward the touch screen 190, such as down, move, or up.

The touch screen event includes information such as the occurrence time, coordinates, and event type of the touch screen event. The coordinates of the touch screen event are two-dimensional (2D) coordinates (tx, ty), and correspond to a resolution of the touch screen 190 in pixels. The tx coordinate corresponds to the horizontal position of the touch screen event. The ty coordinate corresponds to the vertical position of the touch screen event. The event type of the touch screen event is one of 'down', 'move', and 'up'. The 'down' type of the touch screen event indicates that a press gesture starts, and the coordinates include an initial starting location. The 'up' type of the touch screen event indicates that a press gesture is finished, and the coordinates include a final release location. The 'move' type of the touch screen event indicates that a change has happened during a press gesture (between the 'down' type and the 'up' type) and the coordinates include the most recent location.

Referring to FIG. 10, in a touch screen event mode at operation 1000, the controller 110 acquires detalZ (dz) from consecutively input image frames through the camera module 150 to calculate a depth value at operation 1005. In the present disclosure, to determine whether the user takes a press gesture, depth coordinates indicating a distance to a user input means, for example, a finger, are acquired. Depth information may be acquired using calculation of coordinates. The depth information may also be acquired using a depth sensor of the camera module 150.

To calculate the depth value, a current value of a depth may be acquired using feature points in consecutive image frames and then deltaZ (dZ) indicating a moving distance in a depth direction is added to the depth's current value, thus calculating a depth value (z = z + dZ) after movement.

Next, at operation 1010, the controller 110 determines whether the event type is the 'up' type or the 'down' type by using the calculated depth value. The determination is performed using movement in a vertical position in which the touch screen 190 and the finger are perpendicular to each other. For example, assuming that a depth direction toward the touch screen 190 is a (+) direction, if a depth value after movement exceeds a depth threshold value in the (+) direction, a down condition is satisfied; if the depth value after movement exceeds the depth threshold value in a (-) direction, then an up condition is satisfied.

The controller 110 determines whether the event type is the 'move' type by using deltaXY indicating movement in a horizontal position at operation 1015. The controller 110 determines whether movement occurs in the horizontal position in which the finger moves in the horizontal direction.

At operation 1020, the controller 110 determines whether the touch screen event occurs. If the controller 110 determines that the touch screen levent corresponding to one of the 'down' event, the 'move' event, and the 'up' event occurs, the controller 110 sets event type and coordinates of the touch screen event at operation 1025.

The operation of setting the coordinates (tx, ty) of the touch screen event includes acquiring the pointer's position (px, py), acquiring an application scale factor (sax, say) of a currently executed application, and calculating scaled touch screen event's coordinates using Equation 4.

$$tx = sax * px, \quad ty = say * py$$

$$\cdots\cdots\cdots\cdots\cdots\cdots\cdots\cdots\text{Equation (4)}$$

For example, if the touch screen event is set to the 'move' event, the controller 110 regards that the user takes a move gesture of taking a press gesture and a drag gesture, and correspondingly moves and displays the pointer. If the move gesture is not input within a preset time after input of the down gesture, the controller 110 sets the touch screen event to the 'down' event. Thus, the controller 110 dispatches the down gesture to the currently executed application.

At operation 1030, the controller 110 dispatches the touch screen event in the position corresponding to the set coordinates. If the controller 110 determines that the touch screen event forms a gesture such as 'move', 'down', or 'up', the controller 110 dispatches the gesture to the currently executed application. On the other hand, if the touch screen event does not occur at operation 1020, for example, the touch screen event does not correspond to any one of the down event, the move event, and the up event, the controller 110 performs a corresponding function such as tracking the finger's position to determine whether a next touch screen event occurs. As such, according to the present disclosure, if a pointer execution command such as occurrence of a touch screen event as well as movement of a pointer is sensed, the pointer execution command is dispatched to a currently executed application and the execution command is input to a position corresponding to the pointer. Accordingly, the pointer may be controlled corresponding to the user gesture, thus using the user gesture to execute every application of the portable device.

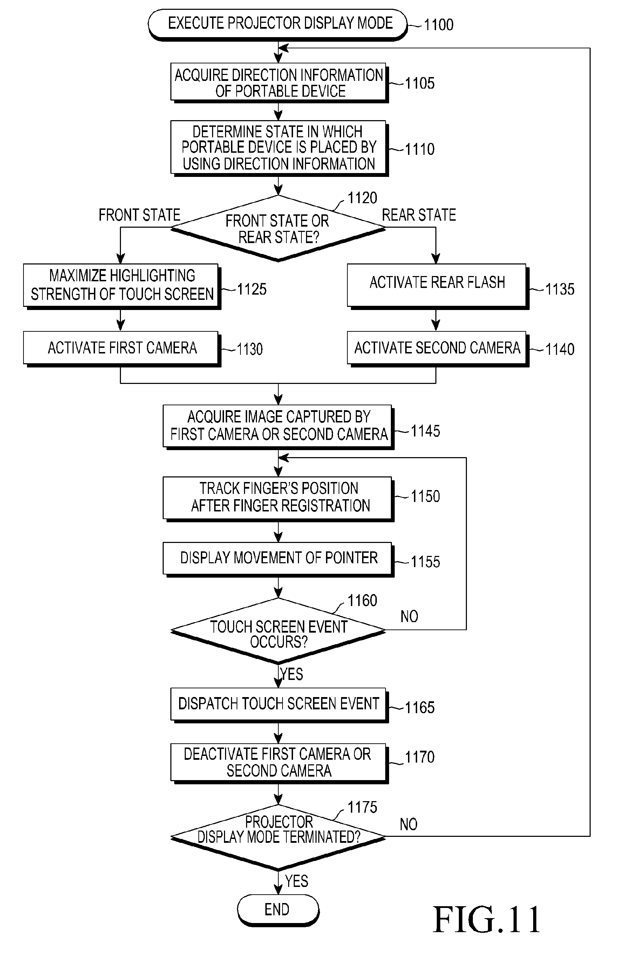

FIG. 11 is a flowchart illustrating operations of a portable device including a projector module according to another embodiment of the present disclosure. In FIG. 4, when the portable device 100 is placed such that only the front surface of the portable device 100 is shown, the first camera 151 on the front surface is used. However, in FIG. 11, according to a state in which the portable device 100 is placed, either the first camera 151 or the second camera 152 is used.

Referring to FIG. 11, execution of the projector display mode at operation 1100 is the same as the operations of operations 400 and 410 of FIG. 4, and thus will not be described in detail. When the projector display mode is executed, the controller 110 acquires direction information of the portable device 100 at operation 1105. The controller 110 determines a state in which the portable device 100 is placed, by using the acquired direction information at operation 1110. At operation 1120, the controller 110 determines whether the state is a front state in which the front surface of the portable device 100 is oriented upward or a rear state in which the rear surface of the portable device 100 is oriented upward.

According to another embodiment of the present disclosure, when the controller 110 determines the state in which the portable device 100 is placed, the controller 110 may use a proximity signal from the proximity sensor 171b as well as direction information from an orientation sensor. For example, since the proximity sensor 171b is disposed on the front surface of the portable device 100, if the user input means approaches the touch screen 190, occurrence of a proximity event is sensed through the proximity sensor 171b. As such, occurrence of the proximity event may indicate that the front surface of the portable device 100 is oriented upward. Thus, when the proximity event occurs, the controller 110 determines that the portable device 100 is placed in such a way that the front surface of the portable device 100 is oriented upward.

If the state in which the portable device 100 is placed is the front state, the controller 110 maximizes the highlighting strength of the touch screen 190 to illuminate an object moving toward the touch screen 190, for example, the user input means, at operation 1125. To photograph the user input means that moves within a predetermined distance from the touch screen 190, the controller 110 activates the first camera 151 mounted on the front surface of the portable device 100 at operation 1130.

On the other hand, for the rear state, the controller 110 activates the rear flash 153 to illuminate the user input means and then activates the second camera 152 mounted on the rear surface of the portable device 110 to photograph the user input means, at operation 1135. If the portable device 100 is placed in the rear state, an image projected by the projector module 177 may be reversed with respect to the front state.

Accordingly, the controller 110 acquires an image captured by the first camera 151 or the second camera 152 at operation 1145, and tracks the finger's position from the acquired image at operations 1150 and 1155 to move the pointer according to the finger's position. Operations 1150 through 1175 are the same as operations 425 through 460 of FIG. 4, and thus will not be described in detail.

In the foregoing various embodiments of the present disclosure, the portable device 100 is placed in such a way that the front surface or the rear surface of the portable device 100 is oriented upward; however, control of the pointer using the finger may also be possible when the portable device 100 is placed to stand upright. According to another embodiment of the present disclosure, to determine whether the portable device 100 is placed to stand upright, the direction information of the portable device 100 may be used.

For example, if the portable device 100 is in a vertical state, (i.e., when the portable device 100 is placed to stand upright), if the controller 110 may not be capable of knowing which one of the front surface and the rear surface of the portable device 100 is oriented toward the user, the controller 110 activates both of the first camera 151 and the second camera 152. In this case, by maximizing the highlighting strength of the touch screen 190, an image in which an object illuminated by light of the touch screen 190 is clearly photographed may be acquired through the first camera 151, and by turning on the rear flash 153, an image in which the object is clearly photographed may also be acquired through the second camera 152. The controller 110 then performs finger detection with respect to the images acquired through the first camera 151 and the second camera 152. Accordingly, the camera that captures an image in which a hand is detected maintains an active state and the other camera that captures an image in which no hand is detected is deactivated.

Thus, tracking of the user input means, for example, a finger, from consecutively captured images and corresponding movement of the pointer may be performed, which are the same as those described above and thus will not be described in detail.

While a user interface of a touch-free type for controlling a pointer through tracking of a motion of a user input means has been described, a method for extending the number of user gestures corresponding to motions of the user input means for use in dispatching an application according to another embodiment of the present disclosure is described below.

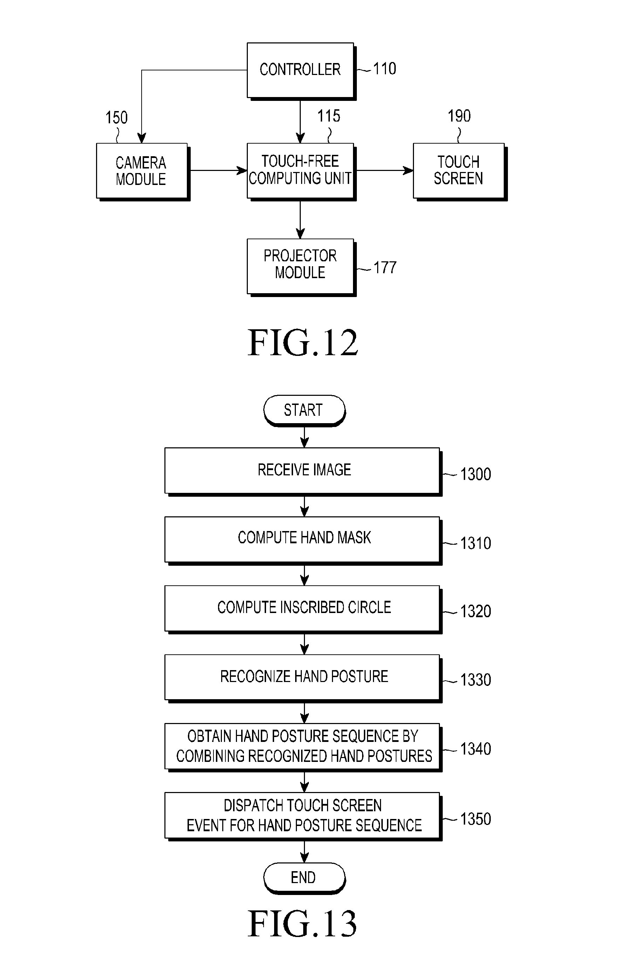

FIG. 12 is a schematic block diagram illustrating a portable device according to further another embodiment of the present disclosure. The method introduced in the current embodiment is applied to real-time images or real-time frames.

Referring to FIG. 12, the camera module 150 operates in the same manner as the camera module 150 illustrated in FIG. 1. The camera module 150 may further include a light emitter in addition to an image sensor. The light emitter may emit infrared light to highlight an image captured by the image sensor. Thus, the infrared light is reflected onto objects located near the camera module 150, for example, a user's hand, to capture an image, such that photographing of the user input means is possible even in a dark environment. The infrared light is not visible to human eyes, and so does not disturb the projection of the image.

The image captured by the camera module 150 is input in real time, and such a series of images may be output as monochromic or grayscale images. Each of the images is represented by a number from 0 to 255, in which 0 is minimal luminosity and 255 is maximal luminosity. As most power consumed by the portable terminal 100 originates from image processing, to minimize power consumption in spite of a continuous turn-on state of the camera module 150 for photographing of the user input means, the controller 110 may control the camera module 150 to output a monochromatic or grayscale image. Such a low-resolution image is used to recognize a hand posture. As such, in an embodiment of the present disclosure, a gray pixel representation of an image has been used as an example, but other representations of pixels may also be used for creation.

The touch-free computing unit 115 receives images captured by the camera module 150, recognizes a hand posture gesture from the images, and dispatches a touch screen event for the hand posture gesture, thus activating a touch-free menu or controlling a position of a pointer. In FIG. 12, the touch-free computing unit 115 is implemented separately, but the touch-free computing unit 115 may also be implemented integrally in the controller 110, and in this case, the controller 110 performs the foregoing operation.

The touch-free computing unit 115 receives a real-time image captured by the camera module 150, processes a pointer corresponding to a user input means acquired from the image to be suitable for characteristics of screen display projected through the projector module 170, and outputs the processed pointer. The touch-free computing unit 115 identifies a user gesture corresponding to motion of the user input means, for example, a tap gesture, a drag gesture, a zoom-in gesture, or a zoom-out gesture, and performs a function that is preset for the identified user gesture. The user gesture may be applied to a method for controlling an arbitrary screen or a graphic user interface corresponding to an executed program, and may be an application execution command. Since the user gesture refers to a particular command that is input onto the touch screen 190 in a touch-free manner, the user gesture may also be referred to as a touch screen gesture, or since the user input means (e.g., a hand) is photographed by the camera module 150, the user gesture may also be referred to as a hand posture gesture.

The portable device 100 controls a pointer on an image projected to outside according to a hand posture gesture, or performs an operation corresponding to occurrence of a touch screen event. A state change of the hand posture gesture is regarded as a touch screen event, such that an operation corresponding to occurrence of the touch screen event is performed.

As such, according to another embodiment of the present disclosure, hand position information is used to control the position of the pointer and hand state or hand posture information is used for a control operation for executing a particular function, thereby allowing the portable device 100 to be controlled by a hand motion without a direct touch unlike a button or a touch screen.

FIG. 13 is a flowchart illustrating operations of a portable device according to further an embodiment of the present disclosure. While the touch-free computing unit 115 performs the operations in FIG. 13, the controller 110 may perform the operations if the touch-free computing unit 115 is integrated into the controller 110.

Referring to FIG. 13, upon receiving a real-time image from the camera module 150 at operation 1300, the touch-free computing unit 115 computes a hand mask for each received image at operation 1310. The hand mask is a data object including a mask that assumes existence of a user hand in the image. At operation 1320, the touch-free computing unit 115 computes an inscribed circle in the hand mask. The touch-free computing unit 115 finds a circle inscribed in the hand mask. At operation 1330, the touch-free computing unit 115 recognizes a hand posture in the hand mask based on an origin point and a radius of the inscribed circle. For example, the touch-free computing unit 115 determines existence of a protruding piece extending by more than the radius from the origin point of the inscribed circle in the hand mask toward a top of the image. If there is no protruding piece, the touch-free computing unit 115 recognizes the hand posture as a clenched first hand posture. If there is one protruding piece, the touch-free computing unit 115 recognizes the hand posture as a one-finger-unfolded hand posture. If there are two protruding pieces, the touch-free computing unit 115 recognizes the hand posture as a two-finger-unfolded hand posture. If there are five protruding pieces, the touch-free computing unit 115 recognizes the hand posture as an open-palm hand posture.

At operation 1340, the recognized hand postures are combined to acquire a hand posture sequence. The recognized hand posture is a data object that is determined as one of hand posture types, for example, a clenched first hand posture, a one-finger-unfolded hand posture, a v-sign two-finger-unfolded hand posture, and an open-palm hand posture. The data object of the determined hand posture type includes a timestamp in recognition. A timestamp may be used to determine orders of a series of hand posture motions with the recognized hand posture.

A method for combining the recognized hand postures into a hand posture sequence may include the following operations. The method may include operations for acquiring recognized hand postures, checking orders of the recognized hand postures, sequentially disposing the recognized hand postures from a first position, and removing the last disposed hand posture if the size of a sequence in which the recognized hand postures are sequentially disposed is a predefined size.

The touch-free computing unit 115 dispatches a touch screen event for the acquired hand posture sequence at operation 1350. An application operation corresponding to the hand posture sequence may be executed or the position of the pointer may be controlled. The hand posture sequence indicates a series of recognized hand postures. The state change of the hand posture corresponds to occurrence of an event on the touch screen. Like a real touch, an operation corresponding to the state change of the hand posture may be performed without a direct touch on the touch screen 190. To this end, event types should be mapped to various modifications of the series of hand postures, (i.e., touch screen gesture types), such that an operation mapped to a state change of a series of hand postures, that is, a change of touch screen gestures may be automatically performed.

In the method for dispatching the touch screen event or controlling the pointer for the hand posture sequence, it is assumed that subsequent hand postures of the hand posture sequence are generated at approximately regular time intervals. The time interval corresponds to 7 - 15 hand postures per sequence, and may generally vary around 4 hand posture frames per second. The time interval may also vary according to the number of frames that may be captured per second by the camera module 150 (a camera FPS parameter) and a processing capability of the portable device 100.

While a tap gesture, a drag gesture, a zoom-in gesture, and a zoom-out gesture are described as representative examples of the touch screen gestures in an embodiment of the present disclosure, the types of the touch screen gestures are not limited to those examples. The touch screen gestures are well known to users of the portable device 100, and the tap gesture is mainly used to select an element of a Graphic User Interface (GUI) or activate an action associated with the element. The drag gesture is used to drag elements on the GUI, and is used to re-arrange the position of an icon, change a current screen, or turn over a picture. The zoom-in and zoom-out gestures are used to scale objects displayed in an application such as a map or an image gallery.

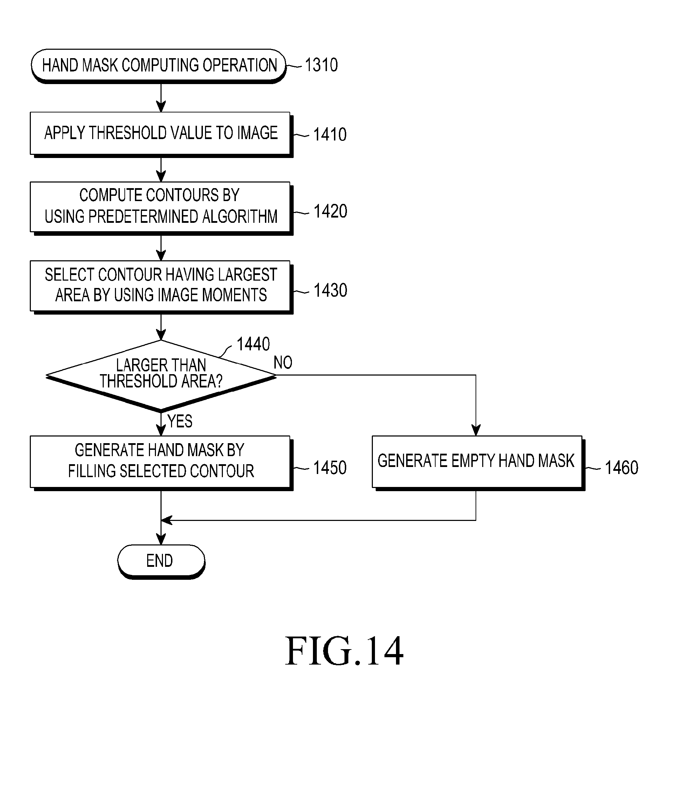

FIG. 14 is a diagram for describing a hand mask computing operation according to an embodiment of the present disclosure.

Referring to FIG. 14, the touch-free computing unit 115 applies a threshold value to an image at operation 1410. The threshold value is applied to each image received in real time. In this case, the mask refers to an image in which respective pixels are represented as binary values, and thus the respective pixels of the mask have a value of 0 or 1. To determine a luminosity of an arbitrary pixel as 0 or 1 in the image, a threshold value for the entire image may be set such that if a luminosity of the pixel is less than the threshold value, the luminosity of the pixel is set to 0; otherwise, if the luminosity of the pixel is greater than the threshold value, the luminosity of the pixel is set to 1. In this case, a conversion result may change according to the set threshold value. Various methods for setting the threshold value may be employed, a representative example of which is an Otsu binarization method. As another example, instead of a threshold value set by the methods, a particular constant value may be used.

Once a threshold value set by the foregoing method is applied to the image, the image has a pixel value of 0 (black) or 1 (white), such that a binarized image in black or white is created. For the binarized image generated by application of the threshold value, the touch-free computing unit 115 computes a set of contours of a mask by using a predetermined algorithm at operation 1420. To compute the set of contours of the mask in the binarized image, a Suzuki-Kasami algorithm may be used. In addition, a connected component labeling method may also be used.

By computing the contours in the mask, a contour of at least one mask may be found. In this case, unwanted masks made by a background as well as a mask expected as a hand may also exist. As such, since contours for a plurality of masks may also exist, this case needs to be considered.

To this end, the touch-free computing unit 115 selects a contour having the largest area by using image moments at operation 1430. If a plurality of contours exist for the mask, image moments for areas of the contours are computed to compute an area of each contour and then a contour having the largest area is selected. The touch-free computing unit 115 determines whether the area of the contour having the largest area is larger than a threshold area at operation 1440. If the area of the contour is not larger than the threshold area, the touch-free computing unit 115 creates an empty hand mask at operation 1460. On the other hand, if the area of the contour is larger than the threshold area, the touch-free computing unit 115 fills the selected contour having the largest area to create a hand mask at operation 1450. The contour having the largest area is determined as a hand mask.

Once the hand mask expected as a hand is determined through the foregoing process, the hand posture corresponding to the hand mask may be actually set. To set the hand posture, the center of the hand mask needs to be set. Accordingly, prior to recognition of the hand posture, an operation of computing an inscribed circle should be performed.

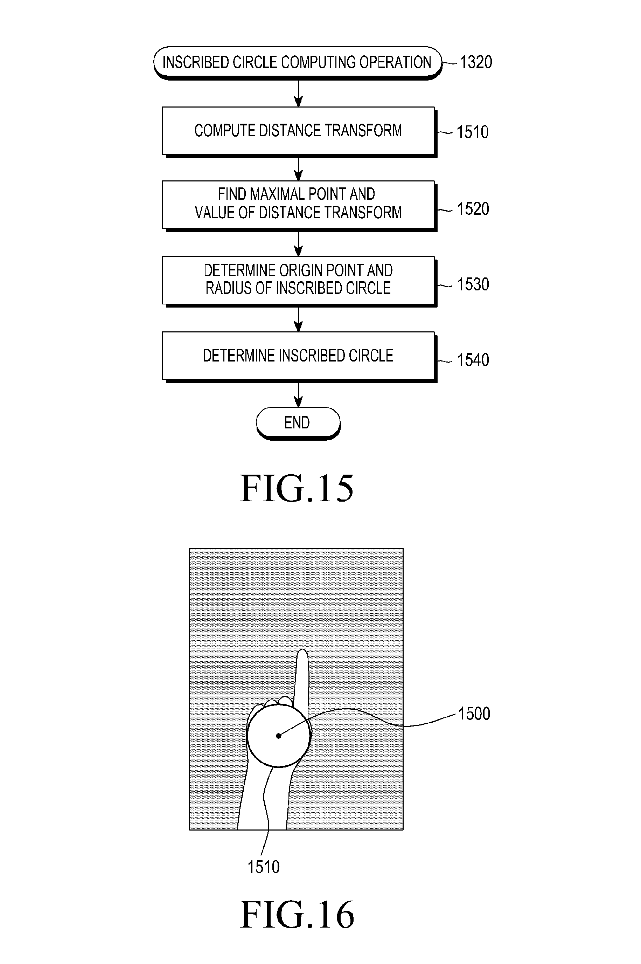

FIG. 15 is a diagram for describing an inscribed circle computing operation according to an embodiment of the present disclosure, and FIG. 16 is a diagram illustrating a method for determining an inscribed circle in an image according to an embodiment of the present disclosure. An inscribed circle refers to a data object representing a circle, including an origin point and a radius.

Referring to FIGS. 15 and 16, the touch-free computing unit 115 computes a distance transform at operation 1510, and finds maximal point and value of the distance transform 1520. In this case, the distance transform for all pixels of the hand mask determined 1450 of FIG. 14 is computed, and the distance transform for each pixel indicates a distance to the closest pixel outside the hand mask. The distance transform computing method may be the method described in the paper "Distance transformations in digital images" by Gunilla Borgefors (Computer Vision, Graphics, and Image Processing, 34(3):344-371, 1986.)

The touch-free computing unit 115 then determines an origin point 1500 and a radius of the inscribed circle as illustrated in FIG. 16 at operation 1530, and determines an inscribed circle 1510 based on the origin point 1500 and the radius at operation 1540. More specifically, the origin point 1500 of the inscribed circle is set to the maximal point of the distance transform and the radius of the inscribed circle is set to the maximal value of the distance transform.

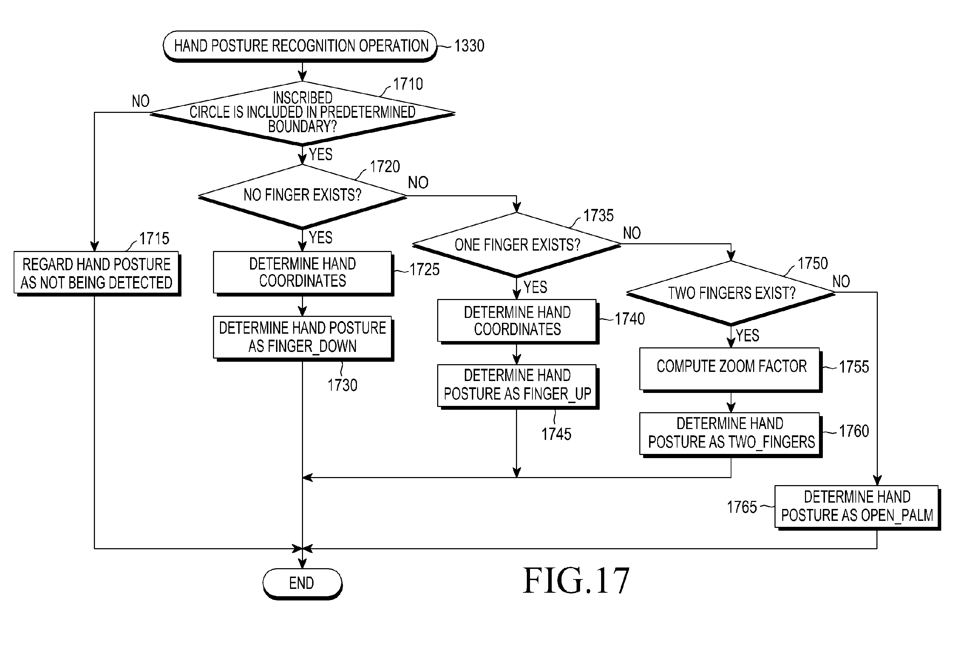

Once the inscribed circle is determined through the foregoing steps, the hand posture may be recognized based on the inscribed circle. FIG. 17 describes a hand posture recognition process of operation 1330.

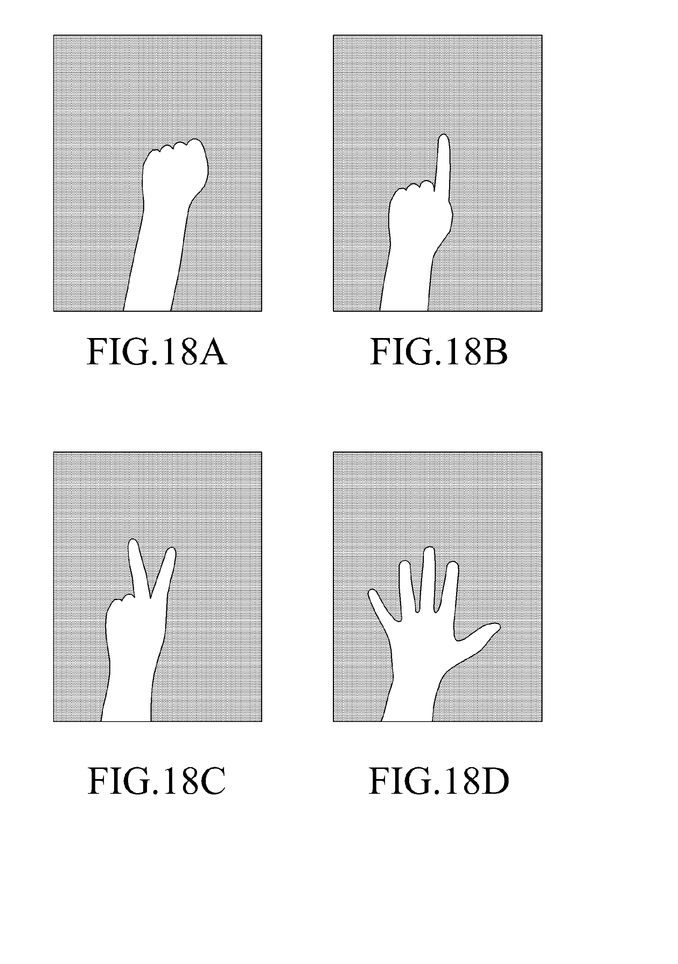

FIG. 17 is a diagram for describing a hand posture recognition operation according to an embodiment of the present disclosure, and FIGS. 18A, 18B, 18C, and 18D are diagrams illustrating different hand postures according to an embodiment of the present disclosure.

Referring to FIGS. 17 and 18A-18D, the touch-free computing unit 115 determines whether the inscribed circle determined at operation 1540 of FIG. 15 is included in a predetermined boundary of the recognized hand posture at operation 1710. If the inscribed circle is not included in the boundary, the touch-free computing unit 115 goes to operation 1715 to regard the hand posture as not being detected and terminate the hand posture recognition process. If the size of the inscribed circle with respect to the entire image size is less than a first threshold value and greater than a second threshold value, the touch-free computing unit 115 determines that the hand posture is not detected. For a relatively small or large hand posture when compared to the entire image size, the touch-free computing unit 115 determines that the hand posture is not detected. In this case, processing with respect to the image in which the hand posture is not detected is terminated, and instead, an operation for processing the next image frame is repeated. For example, if the hand posture is not detected at operation 1330 of FIG. 13, the touch-free computing unit 115 goes back to operation 1300 to receive the next image, and then performs operations 1310 and 1320.

On the other hand, if the inscribed circle is included in the predetermined boundary at operation 1710, the touch-free computing unit 115 classifies the hand posture according to the number of protruding pieces of the hand mask toward the top of the image including the recognized hand posture. If the size of a piece toward the image top divided by the radius of the largest circle inscribed in the hand mask is greater than a threshold, that piece is regarded as a protruding piece. The radius of the largest circle inscribed is the radius of the inscribed circle determined at operation 1530 of FIG. 15.

If the inscribed circle is included in the predetermined boundary at operation 1710, the touch-free computing unit 115 classifies the hand posture in the foregoing manner, thus determining whether a finger exists at operation 1720. Existence of a protruding piece is determined in operation 1720.

If the touch-free computing unit 115 determines that no finger exists, (i.e., no protruding piece exists), then the touch-free computing unit 115 determines hand coordinates at operation 1725 and determines the hand posture as a finger_down hand posture at operation 1730 as illustrated in FIG. 18A. In FIG. 18A, a hand mask of a clenched fist hand posture type is illustrated.

If the touch-free computing unit 115 determines that a finger exists at operation 1720, the touch-free computing unit 115 also determines whether one finger exists at operation 1735. If the touch-free computing unit 115 determines that one finger exists at operation 1735, the touch-free computing unit 115 determines hand coordinates at operation 1740 and then determines the hand posture as a finger_up hand posture as illustrated in FIG. 18B at operation 1745. In FIG. 18B, a hand mask of a forefinger hand posture type is illustrated.

According to an embodiment of the present disclosure, a method for determining hand coordinates is as follows. As described above, the recognized hand posture is a data object determined as, for example, one of a clenched fist hand posture, a one-finger-unfolded hand posture, a v-sign two-finger-unfolded hand posture, and an open-palm hand posture. A data object of a determined hand posture type includes a timestamp of the recognition. The recognized hand posture may further include additional data that includes at least one of hand coordinates and a zoom factor. The hand coordinates are coordinates of a pair of real numbers (x, y), in which $0 \leq x \leq 1$ and $0 \leq y \leq 1$. The zoom factor is represented as a real number z. Accordingly, the clenched fist hand posture and the one-finger-unfolded hand posture include the hand coordinates, and the v-sign two-finger-unfolded hand posture includes the zoom factor.

For the clenched first hand posture (i.e., finger_down) and the one-finger-unfolded hand posture (i.e., finger_up), hand coordinates are designated as follows. Although the user changes the hand posture between the one-finger-unfolded hand posture and the clenched first hand posture, the hand coordinates should be stable as long as the user does not change the position of the hand posture. This feature helps the user to generate a click event in a precise pointer position.

If the origin point of the largest circle inscribed in the hand mask is $(x_{C,k}, y_{C,k})$, hand coordinates $(x_{H,k}, y_{H,k})$ are determined as follows.

If the current image frame is the first frame or the hand posture recognized for the previous frame is neither the clenched fist hand posture (i.e., finger_down) nor the one-finger unfolded hand posture (i.e., finger_up), the origin point $(x_{C,k}, y_{C,k})$ is assigned to the hand coordinates $(x_{H,k}, y_{H,k})$. That is, the hand coordinates $(x_{H,k}, y_{H,k}) = (x_{C,k}, y_{C,k})$.

On the other hand, if the current image frame is not the first frame and the hand posture recognized for the previous frame is classified as one of the clenched first hand posture (i.e., finger_down) and the one-finger-unfolded hand posture (i.e., finger_up), then the touch-free computing unit 115 takes a square block around coordinates $(x_{C,k-1}, y_{C,k-1})$ from the previous image frame (k-1). The touch-free computing unit 115 also finds the least dissimilar block from the current image frame (k) taken from the neighborhood of $(x_{c,k}, y_{c,k})$. Measurement of dissimilarity between two blocks may be performed by taking a sum of absolute differences of luminances of corresponding pixels. A position difference between these blocks is indicated by $(\Delta x_k, \Delta y_k)$. In this case, the hand coordinates $(x_{H,k}, y_{H,k}) = (x_{C,k-1}, y_{C,k-1}) + (\Delta x_k, \Delta y_k)$.

Once the hand coordinates are determined in this way, the hand coordinates based on scaling are $(x_{P_k}, y_{P,k}) = (S_x * x_{H,k} + T_x, S_y * y_{H,k} + T_y)$. $S_x$ and $S_y$ are scaling factors and $T_x$ and $T_y$ are translating factors.

If the touch-free computing unit 115 determines that one finger does not exist at operation 1735, the touch-free computing unit 115 determines whether two fingers exist at operation 1750. If the touch-free computing unit 115 determines that two fingers exist at operation 1750, the touch-free computing unit 115 computes a zoom factor at operation 1755 and determines the hand posture as a v-sign two-finger-unfolded hand posture as illustrated in FIG. 18C at operation 1760. In FIG. 18C, the hand mask of the v-sign two-finger-unfolded hand posture type is illustrated.

A method for computing a zoom factor for the v-sign two-finger-unfolded hand posture is as described below.

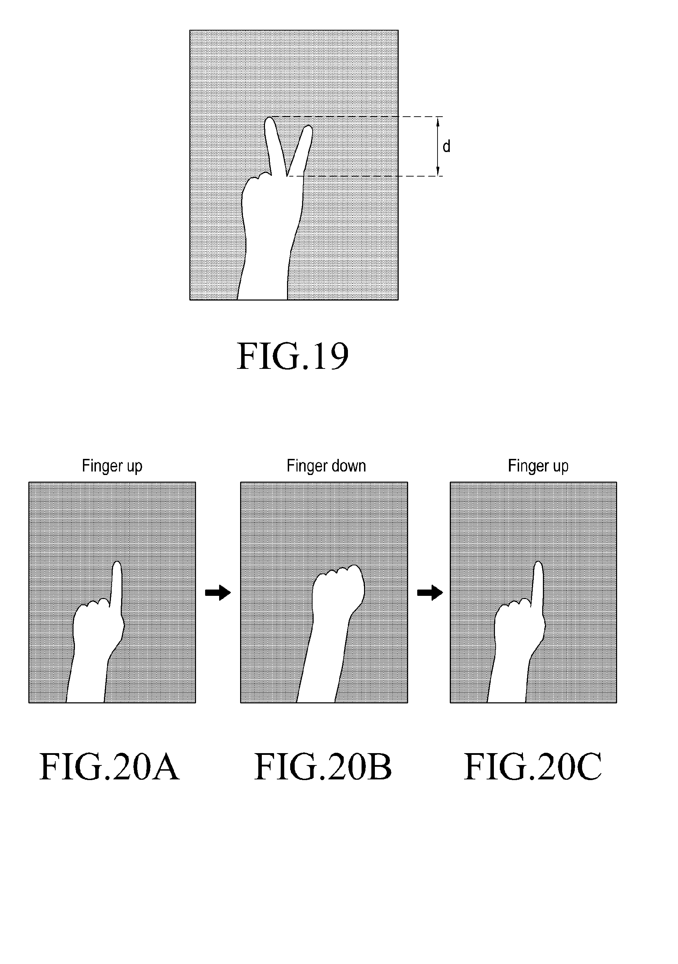

FIG. 19 is a diagram for describing a method for computing a zoom factor according to an embodiment of the present disclosure.

Referring to FIG. 19, let a zoom factor for the current image frame ($k$) be $zoom\_factor_k$. To determine the zoom factor, a two fingers slot measure is used. According to an embodiment of the present disclosure, as illustrated in FIG. 19, the two fingers slot measure is assumed as a horizontal distance (d) from the most protruding hand mask border point (the top of the most protruding finger) to the lowermost hand mask border point between the two most protruding fingers. For each frame (numbered by $k$), a raw zoom factor measure is designated and is denoted by $raw\_zoom\_factor_k$. To designate a final zoom factor for (indicated by) the current frame $k$ ($zoom\_factor_k$), a particular smoothing algorithm is applied for raw_zoom_factor values with a smoothing measure denoted by H. The value of H is assumed to be an arbitrary positive constant. In an embodiment of the present disclosure, H = 0.03.

According to an embodiment of the present disclosure, a method for designating a zoom factor ($zoom\_factor_k$) for the image frame $k$ is as follows.

If there is no hand posture recognized for the previous frame, (i.e., if there is no v-sign two-finger-unfolded (two_fingers) hand posture), a current two fingers slot measure is assigned to initial_slot, 1 is assigned to $raw\_zoom\_factor_k$, and 1 is also assigned to $zoom\_factor_k$.

On the other hand, if there is a hand posture recognized for the previous frame, (i.e., if there is a v-sign two-finger-unfolded (two_fingers) hand posture), $raw\_zoom\_factor_k$ = initial_slot / (current two fingers slot measure) is assigned, and according to the following three conditions, $zoom\_factor_k$ is determined.

First, if $raw\_zoom\_factor_k$ - $zoom\_factor_{k-1}$ > H, then $zoom\_factor_k$ = $raw\_zoom\_factor_k$ - H is assigned.

Second, if $raw$-$zoom$-$factor_k$ - $zoom\_factor_{k-1}$ < H, then $zoom\_factor_k$ = $raw\_zoom\_factor_k$ + H is assigned.

Third, if the foregoing two conditions are not satisfied, then $zoom\_factor_k$ = $zoom\_factor_{k-1}$ is assigned.

$zoom\_factor_{k-1}$ is a zoom factor in the previous frame.

If the touch-free computing unit 115 determines that two fingers do not exist at operation 1750, the touch-free computing unit 115 determines the hand posture as the open-palm hand posture at operation 1765 as illustrated in FIG. 18D. In FIG. 18D, a hand mask of the open-palm hand posture type is illustrated.

If the hand posture is recognized in this way, the recognized hand postures are combined to acquire a hand posture sequence and a touch screen event is dispatched for each hand posture sequence. That is, for each hand posture sequence, touch screen gestures are dispatched to an application or a position of a pointer is controlled. The touch screen gesture is represented as a sequence of touch screen events.

The touch screen event includes information such as a creation time, coordinates, a type, and a pointer number. The coordinates of the touch screen event are two-dimensional (tx, ty) and correspond to the resolution of the touch screen in pixels. The tx coordinate corresponds to the horizontal position of the touch event. The ty coordinate corresponds to the vertical position of the touch event. The type of the touch screen event is one of down, move and up.

The down type of the touch screen event indicates that a gesture is started and the coordinates contain the initial starting location. The up type of the touch screen event indicates that the gesture is finished and the coordinates contain the final release location. The move type of the touch screen event indicates that pointer position change has happened during the gesture (between the down type and the up type), and the coordinates contain the most recent location. The pointer number is used for multi-touch purposes.

For example, a tap gesture may consist of a sequence of touch screen events including event type down and event type up. A drag gesture may consist of a sequence of touch screen events including event type down, event type move, and event type up. A zoom-in or zoom-out gesture may consist of a sequence of touch screen events including event type down for pointer 1, event type down for pointer 2, event type move for pointer 1, event type move for pointer 2, event type up for pointer 1, and event type up for pointer 2.

For example, the tap gesture corresponds to a case in which a gesture is started in the initial starting location and is finished without pointer position change. The zoom-in or zoom-out gesture, because of using two fingers, corresponds to a case in which a gesture is started in respective initial starting locations corresponding to pointer 1 and pointer 2, position change occurs between pointer 1 and pointer 2, and then the gesture is finished.

A relationship between the touch screen and the touch screen event is as shown in Table 1.

Table 1

| Touch Screen Gesture | Touch Screen Events |
|---|---|
| Tap Gesture | Event type down<br>Event type up |

(continued)

| Touch Screen Gesture | Touch Screen Events |
|---|---|
| Drag Gesture | Event type down<br>Series of event type move<br>Event type up |
| Zoom-In/Out Gestures | 1. Event type down for pointer 1<br>2. Event type down for pointer 2<br>Series of event type move (for pointer 1 or 2)<br>Event type up (for pointer 2 or 1)<br>Event type up (for pointer 1 or 2) |

Table 2

| Hand Postures Sequence | Touch Screen Gestures | Pointer Position |
|---|---|---|
| Finger_up<br>Finger_up | | Move pointer |
| Finger_up<br>Finger_down<br>Finger_up | Tap gesture | |
| Finger_up<br>Finger_down (x2, y2)<br>Finger_down (x3, y3), where x3!=x2 or y3!=y2<br>Finger_up | Drag gesture | |
| Two_fingers (z1)<br>Two_fingers (z2), where z2!=z1 | Zoom in/out gesture | |

Table 2 shows a relationship between a hand posture and a touch screen gesture or a pointer position. In Table 2, a hand posture sequence which combines finger_down hand postures indicating a clenched first hand posture in image frames is regarded as an input for controlling the position of the pointer.

FIG. 20A through 20C illustrates a hand posture sequence corresponding to a tap gesture according to an embodiment of the present disclosure.

Referring to Table 2 and FIGS. 20A through 20C, a hand posture sequence is acquired which is a combination of finger_up which is a one-finger-unfolded hand posture in FIG. 20A, finger_down which is a clenched fist hand posture in FIG. 20B, and a finger_up hand posture of FIG. 20C. In this case, the hand posture sequence is regarded as the tap gesture. Once the user consecutively unfolds one finger, clenches a fist, and unfolds the finger again, without doing a tap gesture by directly touching the touch screen 190, the portable device 100 recognizes the hand postures and thus performs an operation corresponding to the tap gesture.

The drag gesture is a hand posture sequence in which the user unfolds one finger, clenches a fist, and then unfolds the finger again. As shown in Table 2, if the position of finger down (x2, y3) and the position of the next finger down (x3, y3) change, then it is determined that the user clenches the fist.

The zoom-in/zoom-out gesture corresponds to a hand posture sequence in which a two_fingers hand posture is recognized and then a two_fingers hand posture having a different zoom factor is recognized again. In this case, when the user takes the two-finger-unfolded hand posture, if an interval between two fingers changes, a zoom factor also changes, such that a zoom-in/zoom-out operation is performed.

Table 1 and Table 2 may be combined into Table 3.

Table 3

| Hand postures sequence | Touchscreen gestures | Touchscreen events |
|---|---|---|
| Finger_up<br>Finger_down | Tap gesture | 1.-<br>2. Event type down |

(continued)

| Hand postures sequence | Touchscreen gestures | Touchscreen events |
|---|---|---|
| Finger_up | | 3. Event type up |
| Finger_up<br>Finger_down (x2, y2)<br>Finger_down (x3, y3), where x3! =x2 or y3! =y2<br>Not finger down | Drag gesture | 1.-<br>2. Event type down<br>3. Series of event type move<br>4. Event type up |
| Two_fingers (z1)<br>Two_fingers (z2), where z2!=z1 Not two fingers | Zoom in/out gesture | 1. Events type down for pointer 1 and 2<br>2. Series of event type move for pointer 1 or 2<br>3. Event type up for pointer 2 and 1 |

To dispatch a touch screen event and control a position of a pointer for a hand posture sequence, when the start and end of each gesture are known, an operation corresponding to the gesture may be performed.

For example, when the start of a zoom gesture and the end of the zoom gesture are known, the amount of zoom-in or zoom-out with respect to zoom gestures between the start and the end may be determined. The start of the zoom gesture is defined as zoom-down and the end of the zoom gesture is defined as zoom-up.

A method for determining a zoom-down condition includes obtaining a down state mark, obtaining a zoom state mark, obtaining a first element from a hand posture sequence, and obtaining a second element from the hand posture sequence. The down state mark and the zoom state mark are expressed as Boolean values (enabled or disabled).

If the down state mark is disabled, the zoom state mark is disabled, and the first element is two_fingers, and the second element is not two_fingers, then it is determined that the zoom down condition is satisfied. Based on consecutive hand postures, if the hand posture is not two_fingers, and then the hand posture is two_fingers and at the same time, the down state mark and the zoom state mark are disabled, then the conditions for determining the start of the zoom gesture are satisfied.

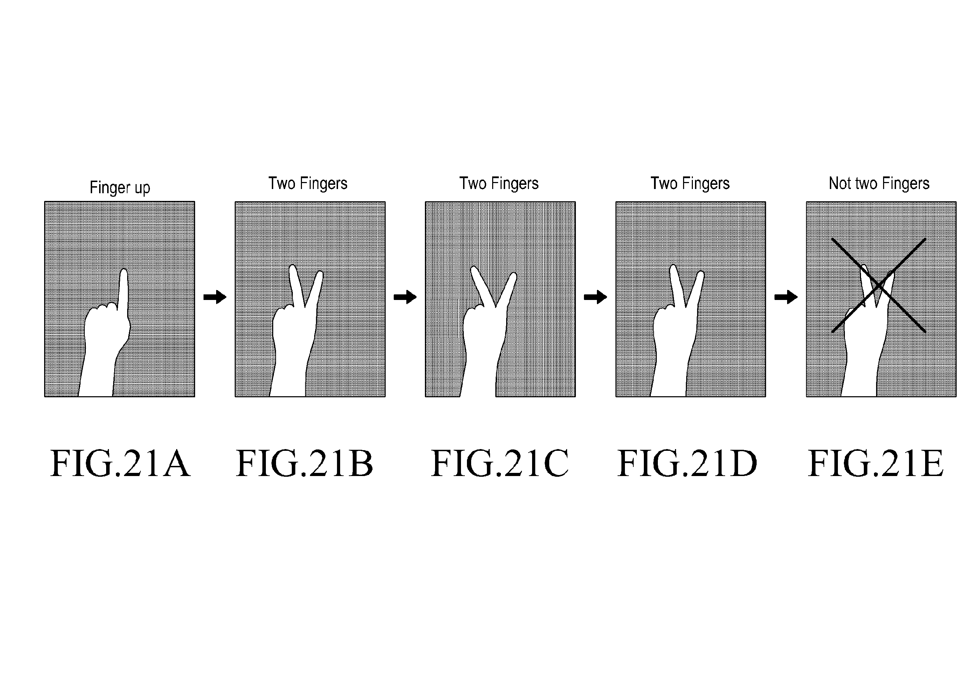

In relation to the zoom gesture, zoom-down and zoom-up are described below with reference to FIGS. 21A through 21E.

FIG. 21A illustrates a case where a hand posture is finger_up, FIGS. 21B through 21D illustrate a case where a hand posture is two_fingers, and FIG. 21E illustrates a case where a hand posture is not two_fingers according to an embodiment of the present disclosure.

Referring to FIGS. 21A-21D, if the hand posture is changed from finger_up as illustrated in FIG. 21A into two_fingers as illustrated in FIG. 21B, zoom-down is determined. FIGS. 21B through 21D illustrate a case where a hand posture is two_fingers, and thus it is determined that the zoom condition is satisfied. In this case, when the zoom condition is satisfied, an operation corresponding to zoom-in/zoom-out is performed. If the hand posture is changed from two_fingers as illustrated in FIG. 21D to a hand posture that is not two_fingers as illustrated in FIG. 21E, zoom-up is determined.

If the zoom-down condition is satisfied, then a zoom gesture is started, and thus coordinates of two fingers from the start of the zoom gesture to the end of the zoom gesture are obtained by the following steps.

If the zoom-down condition is satisfied, because two fingers exist as illustrated in FIG. 21B, an operating process corresponding to zoom-down includes computing coordinates of a first pointer and a second pointer corresponding to the respective two fingers, generating a first touch screen event and a second touch screen event, dispatching the first touch screen event and the second touch screen event, and enabling a zoom state mark. The first touch screen event is set such that type = down, position = position of the first pointer, and pointer index = 1. The second touch screen event is set such that type = down, position = position of the second pointer, and pointer index = 2.

In this case, the coordinates of the first pointer and the second pointer may be computed, (i.e. where the two fingers are located on the touch screen may be known), when the size of the touch screen is known. To this end, the coordinates computing process may include obtaining the size (sx, sy) of the touch screen, obtaining a zoom factor (zf), for example, applying a boundary condition for the zoom factor such as 0.5 < zf < 1.5, scaling the zoom factor according to an equation of zf = (zf - 0.5) * 0.5, setting the coordinates of the first pointer, and setting the coordinates of the second pointer. When the coordinates of the first pointer are (px1, py1), then px1 = zf * sx and py1 = zf * sy. If the coordinates of the second pointer are (px2, py2), then px2 = (1-zf) * sx and py2 = (1-zf) * sy. For zoom factor (zf), a two fingers slot measure is used as described above, and the operation of obtaining the zoom factor and applying the boundary condition to the zoom factor is the same as operation 1755 of FIG. 17, and thus will not be described in detail.

For example, in FIG. 21C, the user spaces two fingers apart larger than in FIG. 21B, and in this case, for different intervals between two fingers, the zoom factor (zf) in FIG. 21B and the zoom factor (zf) in FIG. 21C are different from each other. Accordingly, as the zoom factor is scaled, the coordinates of the first pointer and the coordinates of the second pointer also change.

If a zoom-up condition is satisfied, then a zoom gesture is finished, and a method for determining a zoom-up condition includes obtaining a zoom state mark and obtaining a first element from a hand posture sequence.

For example, if the zoom state mark is enabled and the first element is not two_fingers, it is determined that the zoom-up condition is satisfied. If the zoom-up condition is satisfied, operations corresponding to the zoom-up condition include, as in obtaining coordinates of two fingers in zoom-down, computing coordinates of the first pointer and coordinates of the second pointer corresponding to respective fingers, generating the first touch screen event and the second touch screen event, dispatching the first touch screen event and the second touch screen event, and disabling the zoom state mark. The first touch screen event is set such that type = up, position = position of the first pointer, and pointer index = 1. The second touch screen event is set such that type = up, position = position of the second pointer, and pointer index = 2.

Even when the hand posture changes from FIG. 21B to FIG. 21C or from FIG. 21C to FIG. 21D between zoom-down and zoom-up, the zoom condition may be satisfied if the hand posture two_fingers is maintained. A method for determining the zoom condition includes the following operations.

The method for determining the zoom condition includes obtaining the zoom state mark, obtaining the first element from the hand posture sequence, and obtaining the second element from the hand posture sequence. If the zoom state mark is enabled, both the first element and the second element are two_fingers, and an absolute value of a difference between zoom factors of the first element and the second element is larger than a predefined value, then it is determined that the zoom condition is satisfied.

If the zoom condition is satisfied, the operating process corresponding to zoom includes computing the coordinates of the first pointer and the coordinates of the second pointer, generating the first touch screen event and the second touch screen event, and dispatching the first touch screen event and the second touch screen event.

The first touch screen event is set such that type = move, position = position of the first pointer, and pointer index = 1. The second touch screen event is set such that type = move, position = position of the second pointer, and pointer index = 2.

The zoom-down condition indicating start of zoom control, the zoom condition indicating change of the zoom, and the zoom-up condition indicating end of zoom control have been described above; for the touch screen, they correspond to down, move, and up, respectively.

The following description will be made regarding a down condition indicating a process in which the state of a finger changes to a finger_down state, an up condition indicating a process in which the state of the finger changes to a finger_up state, a move condition indicating a process in which the finger's state changes from a clenched fist state to an open-palm state, and a menu condition indicating a process in which the finger's state changes from the open-palm state to the clenched fist state.

As in the method for determining the zoom-down condition, the method for determining the down condition includes obtaining the zoom state mark, obtaining the down state mark, obtaining the first element from the hand posture sequence, and obtaining the second element from the hand posture sequence. If the zoom state mark is disabled, the down state mark is disabled, the first element is finger_down, and the second element is finger_up, the down condition is satisfied.

If the down condition is satisfied, an operation corresponding to down includes computing the position of the pointer corresponding to a finger, generating a touch screen event, dispatching the touch screen event, and enabling the down state mark. The touch screen event is set such that type = down, position = position of the pointer, and pointer index = 1.

If the down condition is satisfied, then the finger's state changes to the one-finger-unfolded state. Accordingly, that finger may be used to control the position of the pointer. The process of obtaining the position of the pointer corresponding to the finger includes obtaining the touch screen size (sx, sy), obtaining the hand coordinates (hx, hy), and setting the pointer coordinates (px, py) to px = hx * sx and py = hy * sy.

A method for determining the up condition includes obtaining the down state mark and obtaining the first element from the hand posture sequence. The up condition is satisfied if the down state mark is enabled and the first element is not finger_down.

If the up condition is satisfied, then the user's finger state changes to the finger_up state and an operation corresponding to the up condition includes obtaining the position of the pointer, generating the touch screen event, dispatching the touch screen event, and disabling the down state mark. The touch screen event is set such that type = up, position = position of the pointer, and pointer index = 1.

A method for determining the move condition includes obtaining the first element from the hand posture sequence, obtaining the second element from the hand posture sequence, and computing a distance between the hand position of the first element and the hand position of the second element if both the first element and the second element are finger_down or finger_up. If both the first element and the second element are finger_down or finger_up and the computed distance is greater than a predefined distance, then the move condition is satisfied.

If the move condition is satisfied, then the user's finger state maintains the finger_down or finger_up state. Accordingly, the operation corresponding to the move condition includes computing the position of the pointer, controlling the position of the pointer displayed on an application output, and generating the touch screen event and dispatching the touch screen event if the down state mark is enabled. The touch screen event is set such that type = move, position = position of the pointer, and pointer index = 1.

The menu condition indicates that the user clenches the fist and then opens the palm to show all of the five fingers. A method for determining the menu condition includes obtaining the zoom state mark, obtaining the down state mark, obtaining the first element from the hand posture sequence, and obtaining the second element from the hand posture sequence. If the zoom state mark and the down state mark are disabled, the first element is the open_palm hand posture, and the second element is not the open_palm hand posture, then the menu condition is satisfied. For example, if the user clenches the first and then opens the palm, then the menu is activated and displayed.

The activated menu is a control application as a touch-free menu. The output of the touch-free menu application is projected onto the currently executed application. The touch-free menu includes a set of functions generally used in the portable device. For example, the touch-free menu may include functions such as turning off the touch-free interface, exiting the touch-free menu, controlling a volume level, and controlling projection parameters. The touch-free menu may be implemented as a function of a separate application or an operating system. The touch-free menu may be controlled by a touch-free gesture or a touch screen, and may also be implemented by imitating a hardware button of the portable device.

In the foregoing description, in a method for dispatching a touch screen event or controlling a pointer for a hand posture sequence, it is assumed that subsequent hand postures of a hand posture sequence are generated at approximately regular time intervals. This method may also be defined at different time intervals for the zoom down condition, the zoom up condition, the zoom condition, the down condition, the up condition, the move condition, and the menu condition. For example, for shorter time intervals, the timestamp of the hand posture as well as subsequent hand posture types also should be determined.

In addition to the foregoing method, another method for dispatching the touch screen event or controlling the position of the pointer may be used for a hand posture sequence. Generally, the method controls the position of the pointer or dispatches the touch screen event if hand movement is observed. The pointer position is controlled when a first hand posture is detected. On the other hand, a touch screen drag gesture is emulated when a second hand posture is detected. The touch screen zoom gesture is emulated when a third hand posture is detected. The touch screen tap gesture is emulated when a series of hand postures are detected. The series of hand postures, (i.e., the hand posture sequence) includes the first hand posture, the second hand posture, and then the first hand posture again as illustrated in FIGS. 20A through 20C. The menu is invoked when a fourth hand posture is detected.

The method may include additional operations, for example, an operation of hiding the pointer or deactivating the touch-free computing unit. The pointer may be hidden if the hand is not detected in a predefined period. If the user does not want to operate the touch-free interface for a predetermined time, hiding of the pointer may be useful, for example, when watching a movie. The touch-free computing unit may be deactivated if the hand is not detected in a second predefined period. In this case, by deactivating the interface, battery power may be saved.

According to the present disclosure, the portable device recognizes the user gesture and executes an operation, such that the user gesture may be used to execute every application of the portable device and the user may quickly and accurately manipulate the portable device.

According to the present disclosure, the user may see an image projected from the projector module without jittering while easily manipulating the portable device, thus maximizing user convenience.

It can be seen that the various embodiments of the present disclosure may be implemented with hardware, software, or a combination of hardware and software. Such arbitrary software may be stored, whether or not erasable or re-recordable, in a volatile or non-volatile storage such as a Read-Only Memory (ROM); a memory such as a Random Access Memory (RAM), a memory chip, a device, or an integrated circuit; and an optically or magnetically recordable and machine (e.g., computer)-readable storage medium such as a Compact Disc (CD), a Digital Versatile Disk (DVD), a magnetic disk, or a magnetic tape. It can be seen that the image playback method according to the present disclosure may be implemented by a computer or a portable device which includes a controller and a memory. The memory is an example of a non-transitory machine-readable storage medium which is suitable for storing a program or programs including instructions for implementing the various embodiments of the present disclosure. Therefore, the present disclosure includes a program including codes for implementing an apparatus or method claimed in an arbitrary claim and a machine-readable storage medium for storing such a program.

The portable device may receive and store the program from a program providing device connected in a wired or wireless manner. The program providing device may include a memory for storing a program including instructions for instructing portable device to execute the claimed method for providing the touch-free interface, information necessary for the method for providing the touch-free interface, a communication unit for performing wired or wireless communication with the portable device, and a controller for transmitting a corresponding program to the portable device at the request of the portable device or automatically.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for providing a touch-free interface in a portable device, the method comprising:

   displaying an execution screen of an application on a touch screen of the portable device;
   projecting and displaying a projection image corresponding to the execution screen of the application outside the portable device;
   activating a camera module to photograph a user input means;
   displaying a pointer on the projection image; and
   moving and displaying the pointer corresponding to the user input means photographed by the camera module.

2. The method of claim 1, further comprising;
   detecting a proximity event as the user input means approaches while the execution screen of the application is displayed on the touch screen; and
   activating the camera module if the proximity event is sensed.

3. The method of claim 1 or 2, further comprising:

   acquiring direction information of the portable device; and
   determining a state in which the portable device is placed, based on the direction information; and
   activating a camera provided on a front surface of the portable device, if the state is a state in which the front surface of the portable device is oriented upward.

4. The method of one of claim 1 to 3, further comprising
   activating a camera provided on a rear surface of the portable device, if the state is a state in which the rear surface of the portable device is oriented upward.

5. The method of one of claim 1 to 4, further comprising:

   determining whether at least one of a condition that a distance to the user input means is less than a threshold distance and a condition that a duration of occurrence of the proximity event exceeds a threshold time, if the proximity event is detected; and
   determining whether to activate the camera module according to whether the at least one condition is satisfied.

6. The method of one of claim 1 to 5, further comprising:

   comparing each of sequentially consecutive image frames with a previous image frame based on a plurality of image frames including the user input means, if the plurality of image frames are consecutively captured by the camera module;
   extracting feature points of the user input means from each of the consecutive image frames;
   tracking a position of the user input means based on the extracted feature points; and
   moving and displaying the pointer to correspond to the tracked position of the user input means.

7. The method of one of claim 1 to 6, further comprising:

   recognizing a hand posture in the projection image if a plurality of image frames including the user input means are continuously captured by the camera module;
   obtaining a hand posture sequence by combining the recognized hand postures; and
   dispatching a touch screen gesture corresponding to the hand posture sequence.

8. The method of one of claim 1 to 7, wherein if the recognized hand posture is a clenched fist hand posture, the hand posture is used to emulate a touch screen drag gesture;

wherein if the recognized hand posture is a one-finger-unfolded hand posture, the hand posture is used to control the position of the pointer;

wherein if the recognized hand posture is an open-palm hand posture, the hand posture is used to activate a touch-free menu; and

wherein if the recognized hand posture is a two-finger-unfolded hand posture, the hand posture is used to emulate a zoom gesture.

9. The method of one of claim 1 to 8, further comprising:

acquiring depth information based on the extracted feature points;

determining whether a touch screen event indicating a press gesture of the user input means occurs based on the depth information;

setting coordinates at which the touch screen event occurs, when the touch screen event indicating the press gesture occurs; and

dispatching the touch screen event in a position corresponding to the coordinates.

10. A portable device for providing a touch-free interface, the portable device comprising:

a display configured to display an execution screen of an application;

a projector module configured to project and display a projection image corresponding to the execution screen of the application outside the portable device;

at least one camera module configured to continuously capture a plurality of image frames including a user input means; and

a controller configured to display a pointer on the projection image, and to move and display the pointer corresponding to the user input means photographed by the camera module.

11. The portable device of claim 10, further comprising:

a sensor module configured to detect a proximity event as the user input means approaches while the execution screen of the application is displayed on the touch screen and configured to handle a current orientation of the portable device.

12. The portable device of claim 10 or 11, wherein the controller activates a camera provided on a front surface of the portable device among at least one camera module if a state in which the portable device is placed is a state in which a front surface of the portable device is oriented upward, and

wherein the controller activates a camera provided on a rear surface of the portable device among the at least one camera module if the state in which the portable device is placed is a state in which a rear surface of the portable device is oriented upward.

13. The portable device of one of claim 10 to 12, wherein the controller compares each of sequentially consecutive image frames with a previous image frame based on the plurality of image frames, extracts feature points of the user input means from each of the consecutive image frames, tracks a position of the user input means based on the extracted feature points, and moves and displays the pointer to correspond to the tracked position of the user input means.

14. The portable device of one of claim 10 to 13, wherein if a plurality of image frames including the user input means are continuously captured by the camera module, the controller recognizes a hand posture in the image, obtains a hand posture sequence by combining the recognized hand postures, and dispatches a touch screen gesture corresponding to the hand posture sequence.

15. The portable device of one of claim 10 to 14, wherein if the recognized hand posture is a clenched fist hand posture, the hand posture is used to emulate a touch screen drag gesture,

wherein if the recognized hand posture is a one-finger-unfolded hand posture, the hand posture is used to control the position of the pointer,

wherein if the recognized hand posture is an open-palm hand posture, the hand posture is used to activate a touch-free menu, and

wherein if the recognized hand posture is a two-finger-unfolded hand posture, the hand posture is used to emulate

a zoom gesture.

FIG.1

**FIG.2**

FIG.3

START

EXECUTE APPLICATION — 400

EXECUTE PROJECTOR DISPLAY MODE — 405

DISPLAY APPLICATION EXECUTION SCREEN THROUGH PROJECTOR MODULE — 410

PROXIMITY EVENT OCCURS? — 415   NO

YES

ACTIVATE FIRST CAMERA — 420

REGISTER FINGER — 425

DISPLAY POINTER CORRESPONDING TO REGISTERED FINGER — 430

TRACK POSITION OF FINGER — 435

DISPLAY MOVEMENT OF POINTER — 440

TOUCH SCREEN EVENT OCCURS? — 445   NO

YES

DISPATCH TOUCH SCREEN EVENT — 450

DEACTIVATE FIRST CAMERA — 455

PROJECTOR DISPLAY MODE IS TERMINATED? — 460   NO

YES

END

FIG.4

30

FIG.5A

PROXIMITY SENSING MODE — 525

PROXIMITY EVENT
OCCURS? — 530 → NO

↓ YES

MEASURE DISTANCE — 535

MEASURED DISTANCE <
THRESHOLD DISTANCE? — 540 → NO

↓ YES

MEASURE DURATION OF
OCCURRENCE OF PROXIMITY EVENT — 545

MEASURED TIME >
THRESHOLD TIME? — 550 → NO

↓ YES

ACTIVATE FIRST CAMERA — 555

END

# FIG.5B

FIG.6

Hello world!

720

700

177

150

170b

710

# FIG.7

FIG.8A

FIG.8B

EP 2 790 089 A1

FIG.8C

FIG.8D

36

FIG.9A

FIG.9B

FIG.9C

TOUCH SCREEN EVENT MODE — 1000

CALCULATE DEPTH VALUE — 1005

DETERMINE UP OR DOWN
BY USING CALCULATED DEPTH VALUE — 1010

DETERMINE MOVE — 1015

TOUCH SCREEN EVENT
OCCURS? — 1020

NO

YES

SET TYPE AND COORDINATES
OF TOUCH SCREEN EVENT — 1025

DISPATCH TOUCH SCREEN EVENT — 1030

END

FIG.10

EXECUTE PROJECTOR DISPLAY MODE ~1100

ACQUIRE DIRECTION INFORMATION OF PORTABLE DEVICE ~1105

DETERMINE STATE IN WHICH PORTABLE DEVICE IS PLACED BY USING DIRECTION INFORMATION ~1110

FRONT STATE 〈 FRONT STATE OR REAR STATE? 〉 1120 REAR STATE

FRONT STATE → MAXIMIZE HIGHLIGHTING STRENGTH OF TOUCH SCREEN ~1125

REAR STATE → ACTIVATE REAR FLASH ~1135

ACTIVATE FIRST CAMERA ~1130

ACTIVATE SECOND CAMERA ~1140

ACQUIRE IMAGE CAPTURED BY FIRST CAMERA OR SECOND CAMERA ~1145

TRACK FINGER'S POSITION AFTER FINGER REGISTRATION ~1150

DISPLAY MOVEMENT OF POINTER ~1155

〈 TOUCH SCREEN EVENT OCCURS? 〉 1160 NO

YES

DISPATCH TOUCH SCREEN EVENT ~1165

DEACTIVATE FIRST CAMERA OR SECOND CAMERA ~1170

〈 PROJECTOR DISPLAY MODE TERMINATED? 〉 1175 NO

YES

END

FIG.11

```
                    ┌──────────────┐
                    │  CONTROLLER  │───110
                    └──────────────┘
       150                  │    115              190
        │                   ▼      │                │
  ┌──────────┐      ┌──────────────┐      ┌──────────┐
  │  CAMERA  │─────▶│  TOUCH-FREE  │─────▶│  TOUCH   │
  │  MODULE  │      │COMPUTING UNIT│      │  SCREEN  │
  └──────────┘      └──────────────┘      └──────────┘
                           │
                           ▼
                    ┌──────────────┐
                    │  PROJECTOR   │───177
                    │    MODULE    │
                    └──────────────┘
```

# FIG.12

```
                    ╭──────────╮
                    │  START   │
                    ╰──────────╯
                         │
                         ▼
          ┌─────────────────────────────┐
          │        RECEIVE IMAGE        │──1300
          └─────────────────────────────┘
                         │
                         ▼
          ┌─────────────────────────────┐
          │     COMPUTE HAND MASK       │──1310
          └─────────────────────────────┘
                         │
                         ▼
          ┌─────────────────────────────┐
          │   COMPUTE INSCRIBED CIRCLE  │──1320
          └─────────────────────────────┘
                         │
                         ▼
          ┌─────────────────────────────┐
          │    RECOGNIZE HAND POSTURE   │──1330
          └─────────────────────────────┘
                         │
                         ▼
          ┌─────────────────────────────┐
          │ OBTAIN HAND POSTURE SEQUENCE BY │
          │COMBINING RECOGNIZED HAND POSTURES│──1340
          └─────────────────────────────┘
                         │
                         ▼
          ┌─────────────────────────────┐
          │     DISPATCH TOUCH SCREEN   │
          │ EVENT FOR HAND POSTURE SEQUENCE │──1350
          └─────────────────────────────┘
                         │
                         ▼
                    ╭──────────╮
                    │   END    │
                    ╰──────────╯
```

# FIG.13

HAND MASK COMPUTING OPERATION — 1310

↓

APPLY THRESHOLD VALUE TO IMAGE — 1410

↓

COMPUTE CONTOURS BY
USING PREDETERMINED ALGORITHM — 1420

↓

SELECT CONTOUR HAVING LARGEST
AREA BY USING IMAGE MOMENTS — 1430

↓

1440
LARGER THAN
THRESHOLD AREA? — NO

YES ↓

GENERATE HAND MASK BY
FILLING SELECTED CONTOUR — 1450

GENERATE EMPTY HAND MASK — 1460

↓

END

# FIG.14

INSCRIBED CIRCLE COMPUTING OPERATION — 1320

COMPUTE DISTANCE TRANSFORM — 1510

FIND MAXIMAL POINT AND
VALUE OF DISTANCE TRANSFORM — 1520

DETERMINE ORIGIN POINT AND
RADIUS OF INSCRIBED CIRCLE — 1530

DETERMINE INSCRIBED CIRCLE — 1540

END

## FIG.15

1500

1510

## FIG.16

EP 2 790 089 A1

HAND POSTURE RECOGNITION OPERATION — 1330

INSCRIBED CIRCLE IS INCLUDED IN PREDETERMINED BOUNDARY? — 1710

NO → REGARD HAND POSTURE AS NOT BEING DETECTED — 1715

YES

NO FINGER EXISTS? — 1720

NO

YES

DETERMINE HAND COORDINATES — 1725

DETERMINE HAND POSTURE AS FINGER_DOWN

1730

ONE FINGER EXISTS? — 1735

NO

YES

DETERMINE HAND COORDINATES — 1740

DETERMINE HAND POSTURE AS FINGER_UP

1745

TWO FINGERS EXIST? — 1750

NO

YES

COMPUTE ZOOM FACTOR — 1755

DETERMINE HAND POSTURE AS TWO_FINGERS — 1760

1765 — DETERMINE HAND POSTURE AS OPEN_PALM

END

**FIG.17**

FIG.18A

FIG.18B

FIG.18C

FIG.18D

FIG.19

Finger up　　　　　　　Finger down　　　　　　　Finger up

FIG.20A　　　FIG.20B　　　FIG.20C

FIG.21A  FIG.21B  FIG.21C  FIG.21D  FIG.21E

Europäisches
Patentamt

European
Patent Office

Office européen
des brevets

# EUROPEAN SEARCH REPORT

Application Number

EP 13 18 3392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | US 2011/151926 A1 (KIM HEE WOON [KR] ET AL) 23 June 2011 (2011-06-23)<br>* paragraph [0003] *<br>* paragraph [0011] *<br>* paragraph [0019] *<br>* paragraph [0042] *<br>* paragraph [0053] - paragraph [0056] *<br>* paragraph [0062] - paragraph [0066] *<br>* paragraph [0081] - paragraph [0082] *<br>* figures 1, 2 *<br>----- | 1-6, 10-13<br>7-9,14, 15 | INV.<br>G06F3/03 |
| Y<br>A | US 2008/273755 A1 (HILDRETH EVAN [CA]) 6 November 2008 (2008-11-06)<br>* paragraph [0045] *<br>* paragraph [0068] - paragraph [0071] *<br>----- | 1-6, 10-13<br>7-9,14, 15 | |
| Y | US 2010/321289 A1 (KIM EUN JI [KR] ET AL) 23 December 2010 (2010-12-23)<br>* paragraph [0082] *<br>* paragraph [0095] *<br>----- | 2,5,11 | |
| Y | US 2012/231839 A1 (SEO HYE WON [KR] ET AL) 13 September 2012 (2012-09-13)<br>* paragraph [0115] *<br>----- | 3,4,12 | TECHNICAL FIELDS SEARCHED (IPC)<br><br>G06F<br>H04M<br>G03B |

The present search report has been drawn up for all claims

| Place of search | Date of completion of the search | Examiner |
|---|---|---|
| Munich | 22 July 2014 | Bedarida, Alessandro |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 13 18 3392

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2014

| Patent document cited in search report | Publication date | Patent family member(s) | Publication date |
|---|---|---|---|
| US 2011151926 A1 | 23-06-2011 | CN 102668390 A<br>EP 2514104 A2<br>KR 20110069526 A<br>US 2011151926 A1<br>WO 2011074891 A2 | 12-09-2012<br>24-10-2012<br>23-06-2011<br>23-06-2011<br>23-06-2011 |
| US 2008273755 A1 | 06-11-2008 | CN 101689244 A<br>EP 2153377 A1<br>JP 5453246 B2<br>JP 2010526391 A<br>US 2008273755 A1<br>WO 2008137708 A1 | 31-03-2010<br>17-02-2010<br>26-03-2014<br>29-07-2010<br>06-11-2008<br>13-11-2008 |
| US 2010321289 A1 | 23-12-2010 | KR 20100136649 A<br>US 2010321289 A1 | 29-12-2010<br>23-12-2010 |
| US 2012231839 A1 | 13-09-2012 | EP 2498168 A2<br>KR 20120102365 A<br>US 2012231839 A1 | 12-09-2012<br>18-09-2012<br>13-09-2012 |

EPO FORM P0459

For more details about this annex : see Official Journal of the European Patent Office, No. 12/82

**EP 2 790 089 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GUNILLA BORGEFORS.** Distance transformations in digital images. *Computer Vision, Graphics, and Image Processing,* 1986, vol. 34 (3), 344-371